# EUROPÄISCHE PATENTANMELDUNG

(11) **EP 2 781 813 A1**
(43) Veröffentlichungstag der Anmeldung: **24.09.2014**
(21) Anmeldenummer: 13160432.4
(22) Anmeldetag: 21.03.2013
(51) Int. Cl.: F16K 51/02, F15B 15/14, F16J 15/56, F16K 3/18

(54) **Vakuumventil**

(71) Anmelder: VAT Holding AG, 9469 Haag (CH)
(72) Erfinder: Schön, Mathias, 9465 Salez (CH)
(74) Vertreter: Harmann, Bernd-Günther

(57) **Zusammenfassung**

Die Erfindung betrifft ein Vakuumventil mit mindestens einer Kolben-Zylinder-Anordnung (3) zum Verstellen eines ersten Verschlussglieds (1a) zwischen einer ersten, einer zweiten und einer dazwischen liegenden mittleren Verschlussgliedstellung (C1, C2, C3). Die mit dem ersten Verschlussglied (1a) mechanisch gekoppelte Kolben-Zylinder-Anordnung (3) weist eine Zylindereinheit (4) und eine Kolbeneinheit (7) auf. Ein erster Dichtungskörper (10a; 11a) und ein zweiter Dichtungskörper (10b; 11b) sind unabhängig voneinander axial relativ zu der Zylindereinheit (4) und zu der Kolbeneinheit (7) verschiebbar. Ein erster Axialanschlag (15a) der Zylindereinheit (4) und ein dritter Axialanschlag (16a) der Kolbeneinheit (7) sind derart relativ zueinander angeordnet, dass in der mittleren Verschlussgliedstellung (C3) die axiale Beweglichkeit des ersten Dichtungskörpers (10a; 11a) in Richtung zu einem zweiten Druckraum (5b) gemeinsam von dem ersten Axialanschlag (15a) und dem dritten Axialanschlag (16a) begrenzt ist. Ein zweiter Axialanschlag (15b) der Zylindereinheit (4) und ein vierter Axialanschlag (16b) der Kolbeneinheit (7) sind derart relativ zueinander angeordnet, dass in der mittleren Verschlussgliedstellung (C3) die axiale Beweglichkeit des zweiten Dichtungskörpers (10b; 11b) in Richtung zu einem ersten Druckraum (5a) gemeinsam von dem zweiten Axialanschlag (15b) und dem vierten Axialanschlag (16b) begrenzt ist.

## Beschreibung

Die Erfindung betrifft ein Vakuumventil nach dem Oberbegriff des Anspruchs 1.

Vakuumventile zum im Wesentlichen gasdichten Schliessen eines Fliesswegs, der durch mindestens eine in einer Ventilwand oder einem Ventilgehäuse ausgeformte Öffnung führt, sind in unterschiedlichen Ausführungsformen aus dem Stand der Technik bekannt.

Vakuumventile kommen insbesondere im Bereich der IC- und Halbleiterfertigung, die in einer geschützten Atmosphäre möglichst ohne das Vorhandensein verunreinigender Partikel stattfinden muss, zum Einsatz. Beispielsweise durchlaufen in einer Fertigungsanlage für Halbleiter-Wafer oder Flüssigkristall-Substrate die hochsensiblen Halbleiter- oder Flüssigkristall-Elemente sequentiell mehrere Prozesskammern, in denen die innerhalb der Prozesskammer befindlichen Halbleiterelemente mittels jeweils einer Bearbeitungsvorrichtung bearbeitet werden. Sowohl während des Bearbeitungsprozesses innerhalb der Prozesskammer, als auch während des Transports von Prozesskammer zu Prozesskammer müssen sich die hochsensiblen Halbleiterelemente stets in geschützter Atmosphäre - insbesondere im Vakuum - befinden. Die Prozesskammern sind beispielsweise über Verbindungsgänge miteinander verbunden, wobei die Prozesskammern mittels Vakuumschieberventile zum Transfer der Teile von der einen zur nächsten Prozesskammer geöffnet und im Anschluss zur Durchführung des jeweiligen Fertigungsschritts gasdicht verschlossen werden können. Derartige Ventile werden aufgrund des beschriebenen Anwendungsgebiets auch als Vakuum-Transferventile und aufgrund ihres rechteckigen Öffnungsquerschnitts auch als Rechteckschieber bezeichnet. Das Evakuieren der Kammern oder das Zu- und Abführen von Prozessgasen erfolgt über Zu- und Ableitungen, die insbesondere ebenfalls mittels Vakuumventilen wie Schieber-, Pendel- oder Eckventilen in Form so genannter Peripherieventilen, gasdicht verschossen werden können.

Bei Einsatz von Vakuumventilen im Bereich der Herstellung hochsensibler Halbleiterelemente muss die insbesondere durch die Betätigung des Ventils verursachte Partikelgenerierung und die Anzahl der freien Partikel im Vakuumbereich des Ventilraums möglichst gering gehalten werden. Die Partikelgenerierung ist primär eine Folge von Reibung beispielsweise durch Metall-Metall-Kontakt und durch Abrasion. Als geeignete Antriebe für den Einsatz im Vakuumbereich haben sich vor allem Pneumatikantriebe, insbesondere Linearantriebe in Form von Kolben-Zylinder-Anordnungen durchgesetzt.

Die Abdichtung der zu schliessenden Öffnung kann z.B. entweder über eine auf der Verschlussseite des Verschlussglieds angeordnete Dichtung, die auf den die Öffnung umlaufenden Ventilsitz gepresst wird, erfolgen, oder über eine Dichtung, insbesondere einen Dichtungsring, auf dem Ventilsitz, gegen welche die Verschlussseite des Verschlussglieds gedrückt wird. Unterschiedliche Dichtvorrichtungen sind aus dem Stand der Technik bekannt, beispielsweise aus der US 6,629,682 B2 (Duelli). Ein geeignetes Material für Dichtungsringe ist beispielsweise das unter dem Handelsnamen Viton® bekannte elastische Dichtungsmaterial.

Unterschiedliche Ausführungsformen von Vakuumventilen, insbesondere deren Antriebstechnologien, sind aus dem Stand der Technik bekannt, welche unter anderem als Ziel die Erhöhung der Lebensdauer der eingesetzten Dichtungen sowie eine verbesserte Prozesssicherheit haben.

Abhängig von den jeweiligen Antriebstechnologien wird insbesondere zwischen Schieberventilen, auch Ventilschieber oder Rechteckschieber genannt, und Pendelventilen unterschieden, wobei das Schliessen und Öffnen im Stand der Technik meistens in zwei Schritten erfolgt. In einem ersten Schritt wird ein Ventilverschlussglied, insbesondere ein Verschlussteller, im Falle eines Schieberventils, wie beispielsweise aus der US 6,416,037 (Geiser) oder der US 6,056,266 (Blecha) bekannt, insbesondere des L-Typs, linear über eine Öffnung im Wesentlichen parallel zum Ventilsitz verschoben oder im Falle eines Pendelventils, wie beispielsweise aus der US 6,089,537 (Olmsted) bekannt, um eine Schwenkachse über die Öffnung geschwenkt, ohne dass hierbei eine Berührung zwischen dem Verschlussteller und dem Ventilsitz des Ventilgehäuses stattfindet. In einem zweiten Schritt wird der Verschlussteller mit dessen Verschlussseite auf den Ventilsitz des Ventilgehäuses gedrückt, so dass die Öffnung gasdicht verschlossen wird.

Die beschriebene zweistufige Bewegung, bei welcher das Verschlussglied zuerst quer über die Öffnung geschoben und im Anschluss im Wesentlichen senkrecht auf den Ventilsitz gedrückt wird, hat neben der Möglichkeit einer präzisen Regelung des Durchflusses vor allem den Vorteil, dass die Dichtung nahezu ausschliesslich senkrecht verpresst wird, ohne dass es zu einer Quer- oder Längsbelastung der Dichtung kommt.

Die in zwei Schritten erfolgende Schliessbewegung eines Schieberventils oder eines Pendelventils kann insbesondere mittels eines einzigen Antriebs oder mittels zweier getrennter Antriebe erfolgen.

Antriebsmechanismen, welche mittels eines einzigen Antriebselements sowohl ein in Wesentlichen lineares Verschieben des Verschlusstellers über die Öffnung und ein im Wesentlichen senkrechtes Anpressen des Verschlusstellers auf den die Öffnung umlaufenden Ventilsitz ermöglichen, sind beispielsweise aus der US 6,431,518 B1, US 5,415,376 A, US 5,641,149 A, US 6, 045, 117 A, US 5,934,646 A, US 5,755,255 A, US 6,082,706, US 6,095,180 und US 6,629,682 B2 bekannt.

Der zweistufige Bewegungsablauf kann jedoch auch mittels mehrerer getrennter Antriebsmechanismen oder Antriebselemente erzielt werden. Beispielsweise in der US 6,056,266 (Blecha) und der US 6,561,484 (Nakagawa) werden Schieberventile beschrieben, deren Schubstangen entlang der Schubstangenachse linear verstellbar sind, wodurch der Verschlussteller parallel über die Öffnung geschoben werden kann, ohne dass es zu einer Berührung zwischen dem Verschlussteller und dem Ventilsitz kommt. Der Antriebsmechanismus kann in diesem Fall von einem einfachen Linearbewegungsantrieb, beispielsweise einem Kolben-Zylinder-Antrieb, gebildet werden. Das Anpressen des Verschlusstellers auf den Ventilsitz wird durch einen gesonderten Antrieb im zweigeteilten Verschlussteller oder zwischen dem Verschlussteller und der Schubstange erreicht. Dieser gesonderte Antrieb ist insbesondere als Kolben-Zylinder-Antrieb ausgebildet, mittels welchem die Verschlussseite des Verschlusstellers geradlinig senkrecht auf den Ventilsitz gedrückt werden kann, wie in der US 6,056,266 (Blecha) gezeigt.

Ein ähnliches Vakuumventil mit zwei separaten Antriebselementen wird in der DE 10 2007 030 006 A1 gezeigt. Zur Verschiebung der Ventilstange in ihre Längsrichtung dient eine Kolben-Zylinder-Anordnung, die gegenüber dem Ventilgehäuse in eine Richtung quer zur Längsachse der Ventilstange als Ganzes parallel verschiebbar gelagert ist. Zur Parallelverschiebung dient eine ebenfalls ausserhalb des Vakuumbereichs angeordnete weitere Kolben-Zylinder-Anordnung.

In der DE 10 2008 049 353 A1 (Ehrne, Blecha) wird ein Vakuumventil beschrieben, dessen Ventilstange aus dem Vakuumbereich hinausgeführt und ausserhalb des Vakuumbereichs sowohl mit einer Längsantriebseinrichtung, als auch mit einer separaten Querantriebseinrichtung sowie einer Lagereinheit verbunden ist.

Bei dem aus der WO 2010/034046 A1 bekannten Vakuumventil erfolgt zum Schliessen des Vakuumventils zunächst eine Verschiebung der Ventilstange in Richtung ihrer Längsachse und im Anschluss eine Parallelverschiebung der Ventilstange quer zu ihrer Längsachse. Hierzu ist die Ventilstange von einer ausserhalb des Vakuumbereichs angeordneten Lagereinheit in Richtung ihrer Längsachse verschiebbar gelagert. Die Lagereinheit kann gemeinsam mit der Ventilstange quer hierzu verschoben werden. Zu diesem Zweck dienen Kolben-Zylinder-Anordnungen, die in diese Querrichtung wirken. Bei anderen Ausführungsbeispielen wirken die Kolben-Zylinder-Anordnungen in Richtung der Längsachse der Ventilstange, wobei die Querbewegung der Lagereinheit mittels Lenkern erzeugt wird, die eine Parallelogrammführung bilden.

Ein Nachteil gewisser Vakuumventile, deren Verschlussglied durch eine zweistufige, insbesondere L-förmige Bewegung zuerst quer über den Ventilsitz und im Anschluss senkrecht auf den Ventilsitz verstellbar ist, besteht darin, dass sie in der Regeln nur in eine Dichtungsrichtung hoch beanspruchbar sind. Herrscht auf der Öffnungsseite, zu welcher die Verschlussseite des Verschlussgliedes gerichtet ist, relativer Unterdruck, wird das Verschlussglied aufgrund der Druckdifferenz auf den Ventilsitz gedrückt und wird von diesem Ventilsitz abgestützt. Der Druck wirkt in diesem Fall in die gleiche Schliessrichtung wie der Antrieb selbst. Massnahmen zur Vermeidung einer übermässigen, die Dichtung beschädigenden Verpressung der Dichtung zwischen dem Ventilsitz und der Verschlussseite des Verschlussgliedes sind aus dem Stand der Technik bekannt. Somit vermag das Vakuumventil einen hohen relativen Unterdruck auf der Öffnungsseite aufzunehmen. Herrscht hingegen auf der Öffnungsseite ein relative Überdruck oder, in anderen Worten, herrscht auf der Verschlussgliedseite ein relative Unterdruck, wirkt der Druck entgegen der Schliessrichtung des Antriebs und das Verschlussglied wird aufgrund der Druckdifferenz von dem Ventilsitz weggedrückt. Ohne weitere Massnahmen würde es vom Ventilsitz abheben und das Ventil würde sich öffnen. Sofern das Vakuumventil beidseitig beanspruchbar sein soll, sind also insbesondere Massnahmen zur Abstützung des Verschlussgliedes in die entgegengesetzte Schliessrichtung zu treffen, so dass das Verschlussglied trotz entgegenwirkendem Druck mit ausreichender Kraft auf den Ventilsitz gedrückt wird. Eine derartige Abstützung kann durch ausreichend dimensionierte Antriebs- und Abstützelemente, wie in unterschiedlicher Form aus dem Stand der Technik bekannt, erfolgen.

Alternativ werden anstelle eines einzigen, in eine Richtung schliessenden Verschlussgliedes zwei abhängig oder unabhängig voneinander verstellbare, in entgegengesetzte Richtungen schliessende Verschlussglieder zum Verschliessen zweier gegenüberliegender Ventilöffnungen eingesetzt.

Aus diesem Grunde kommen bei Anwendungen, bei welchen zwischen hohem relativem Überdruck und Unterdruck gewechselt wird, regelmässig Doppel- oder Zweiplattenventile zum Einsatz. Bei derartigen Doppel- oder Zweiplattenventilen kann eine erste Verschlussplattenseite in eine erste Richtung auf einen ersten Ventilsitz, der sich rings um die erste Ventilöffnung erstreckt, und eine gegenüberliegende zweite Verschlussplattenseite in eine entgegengesetzte zweite Richtung auf einen gegenüberliegenden zweiten Ventilsitz, der sich rings um die zweite Ventilöffnung erstreckt, gedrückt werden. Das Verschliessen der gegenüberliegenden Öffnungen kann im Falle gekoppelter Verschlussplatten oder einer einzigen Verschlussplatte, die zwei Verschlussseiten aufweist, wechselweise oder im Falle unabhängig verstellbarer Verschlussplatten gleichzeitig erfolgen. Bestimmte Ausführungen sehen einen Spreizmechanismus zum Auseinanderdrücken der Verschlussplatten und zum jeweiligen Aufdrücken auf den jeweiligen Ventilsitz vor.

Aus dem Stand der Technik sind Vakuumventile bekannt, die ein Ventilgehäuse mit einem Innenraum besitzen, der einen Vakuumbereich des Vakuumventils bildet, mit parallelen Längsachsen aufweisenden ersten und zweiten Ventilöffnungen, die von ersten und zweiten Ventilsitzen umgeben sind. Ein Verschlussglied umfasst erste und zweite Verschlussplatten. Mittels eines Querantrieb ist das Verschlussglied in eine Betätigungsrichtung quer zu den Längsachsen der Ventilöffnungen, also der Öffnungsachse, zwischen einer Offenstellung, in der die Verschlussplatten die Ventilöffnungen freigeben, und einer Zwischenstellung, in der die Verschlussplatten die Ventilöffnungen überdecken, von den Ventilsitzen aber abgehoben sind, verstellbar. Ausserdem ist ein erster Längsantrieb zum Verstellen des Verschlussglieds zwischen der Zwischenstellung und einer ersten Schliessstellung, in der die erste Verschlussplatte an den ersten Ventilsitz angedrückt ist, vorgesehen. Mit Hilfe eines zweiten Längsantriebs ist das Verschlussglied zwischen der Zwischenstellung und einer zweiten Schliessstellung, in der die zweite Verschlussplatte an den zweiten Ventilsitz angedrückt ist, verstellbar.

Aus der US 6,390,448 B1 ist ein Vakuumventil der eingangs genannten Art bekannt. Ein Verschlussglied dieses Vakuumventils weist erste und zweite Verschlussplatten auf, die wechselweise an erste und zweite Ventilsitze angedrückt werden können, welche erste und zweite Ventilöffnungen umgeben. Mittels eines Querantriebs ist das Verschlussglied quer zu den Längsachsen der Ventilöffnungen zwischen einer Offenstellung und einer Zwischenstellung, in der die Verschlussplatten die Ventilöffnungen überdecken, aber von den Ventilsitzen abgehoben sind, verstellbar. Der Querantrieb ist an einem um eine Achse verschwenkbaren Schwenkteil angebracht. Mittels eines Antriebselements kann das Schwenkteil um seine Schwenkachse verschwenkt werden, um die erste Verschlussplatte an den ersten Ventilsitz anzudrücken. Das Antriebselement und die Schwenkachse für das Schwenkteil sind an einem weiteren Schwenkteil angeordnet, welches um eine weitere Schwenkachse mittels eines weiteren Antriebselements verschwenkbar ist. Durch Verschwenkung des weiteren Schwenkteils um die weitere Schwenkachse kann die zweite Verschlussplatte an den zweiten Ventilsitz angedrückt werden. Diese Konstruktion ist relativ aufwendig. Das Vakuumventil ist für Ventilöffnungen mit relativ geringen Öffnungsweiten ausgelegt.

In der US 6,776,394 B2 wird ein Vakuumventil beschrieben, bei welchem ein Ventilteller an einem Schwenkarm angebracht ist. Der Schwenkarm ist an einer um eine Drehachse verschwenkbaren und in Richtung der Drehachse verschiebbaren Welle angebracht. Die Welle ist gegenüber dem Ventilgehäuse mittels einer Kulissenführung geführt. Zum Verschieben der Welle in Richtung der Drehachse und zum Verdrehen der Welle um die Drehachse dient ein in Verbindung mit der Kulissenführung wirkender, in ein Innengewinde der Welle eingeschraubter und mittels eines Antriebselements verdrehbarer Schaft. Weiters sind im Ventilgehäuse Antriebselemente in Form von Kolben-Zylinder-Anordnungen vorgesehen, die mit in den Vakuumbereich hineingeführten stösselartigen Betätigungselementen zusammenwirken. Von diesem kann in der Schliessstellung der Verschlussplatte die Verschlussplatte mit einer zusätzlichen Kraft an den Ventilsitz angedrückt werden.

Das aus der US 2004/0079915 A1 bekannte Vakuumventil weist ein Verschlussglied mit einem Tragteil auf, an welchem eine Verschlussplatte mittels Kolben-Zylinder-Anordnungen verschiebbar angeordnet ist. In der die Ventilöffnung überdeckenden Stellung des Verschlussgliedes kann die Verschlussplatte mittels der Kolben-Zylinder-Anordnung an den die Ventilöffnung umgebenden Ventilsitz angedrückt werden. Vorzugsweise ist weiters eine Abstützplatte vorhanden, die mittels Kolben-Zylinder-Anordnungen gegenüber dem Tragteil verschiebbar ist, wobei sie in der Schliessstellung der Verschlussplatte an eine gegenüberliegende Wand des Ventilgehäuses in einem eine weitere Ventilöffnung umgebenden Bereich angedrückt ist. An der Verschlussplatte und an der Abstützplatte sind Elastomerringe zum Zusammenwirken mit der Wand des Ventilgehäuses angeordnet.

Aus der US 6,561,483 (Nakagawa) und der US 6,561,484 (Nakagawa et al.) sind Schieberventile in unterschiedlichen Ausführungsformen bekannt, die einen zweigeteilten Verschlussteller umfassen. Ein erster Tellerabschnitt besitzt eine Öffnung. Ein zweiter Tellerabschnitt ist mittels eines dehnbaren Körpers mit dem ersten Tellerabschnitt verbunden. Ein Aktuator ist zwischen dem ersten und dem zweiten Tellerabschnitt angeordnet, sodass die beiden Tellerabschnitte aktiv aufeinander zu und voneinander weg bewegt werden können. Der dehnbare Körper ist als ein Faltenbalg ausgebildet. Der erste Tellerabschnitt ist mittels des Aktuators gegen den Ventilsitz anpressbar, wobei sich der zweite Tellerabschnitt - insbesondere im Falle eines ventilsitzseitigen Überdrucks - gegebenenfalls auf einer gegenüberliegenden Ventilgehäuseseite abstützt.

Sowohl für die lineare oder schwenkende Querverstellung des Verschlussgliedes über die Öffnung, als auch für die senkrechte Verstellung des Verschlussgliedes auf den Ventilsitz, wie auch im Falle eines kombinierten Bewegungsablaufs mittels eines Antriebs eignen sich Linearantriebe, insbesondere Kolben-Zylinder-Antriebe oder Spindelantriebe. Spindelantriebe eignen sich vor allem zum relativ langsamen, präzisen Linearverstellen, wobei beliebige Zwischenpositionen mit Selbsthemmung eingenommen werden können, jedoch haben sie einen relativ komplexen Aufbau. Insbesondere aufgrund der mechanischen Gleitverbindung zwischen Spindel und Spindelmutter werden Reibpartikel erzeugt, so dass der Antrieb vom Vakuumbereich des Ventils zu isolieren ist, um eine Prozessbeeinträchtigung zu vermeiden.

Kolben-Zylinder-Antriebe, insbesondere pneumatische oder hydraulische, haben den Vorteil eines einfachen Aufbaus, einer geringeren Partikelerzeugung und einer sehr hohen Verstellgeschwindigkeit, jedoch können Zwischenpositionen vor allem bei Pneumatikantrieben in der Regel nur mit zusätzlichen Regelungsaufwand oder Einsatz mehrerer Kolben-Zylinder-Antriebe präzise angefahren und gehalten werden.

Sowohl bei der Querverstellung des Verschlussglieds quer über den Ventilsitz, als auch bei der senkrechten Verstellung auf den Ventilsitz ist jedoch bei bestimmten Anwendungen, insbesondere zum Einstellen bestimmter Betriebszustände oder Öffnungsquerschnitte oder zur Regelung einer Durchflussmenge, das gezielte, präzise und stabile Verstellen des Linearantriebs in mindestens eine Zwischenstellung erforderlich oder von Vorteil.

Insbesondere, aber nicht ausschliesslich bei Doppelventilen, bei welchen zwei gegenüberliegende Ventilöffnungen wechselweise mit einem Verschlusselement, welche zwei gegenüberliegende Verschlussseiten aufweist, verschlossen werden können, wäre ein einfacher Antrieb, mittels welchem eine definierte Zwischenstellung des Verschlusselements zwischen der ersten und der zweiten Schliessstellung präzise angefahren werden kann, insbesondere zur prozesssicheren Durchführung der Querbewegung, von grossem Vorteil.

Jedoch auch bei einfacheren Schieber- oder Pendelventilen, bei welchen das Schliessen mittels einer Quer- und einer Längsbewegung erfolgt, wäre ein einfacher Antrieb, mittels welchem das Verschlussglieds in eine definierte Mittelstellung verstellt werden kann, vorteilhaft. Bei Einsatz als Querantrieb könnte der Öffnungsquerschnitt beispielsweise in einer definierten Mittelstellung nur teilweise vom Verschlussglied überdeckt sein. Im Falle eines Längsantriebs liesse sich das Verschlussglied zwischen der Zwischenstellung, in welcher sich die Verschlussseite in beanstandeter Gegenüberlage zum Ventilsitz befindet, und der gasdichten Geschlossenstellung in eine definierte Mittelstellung verstellen, um die Durchflussmenge gegenüber der Zwischenstellung weiter zu reduzieren.

Bei im Vakuumbereich zum Einsatz kommenden, einfach aufgebauten Kolben-Zylinder-Antrieben ist das Einnehmen dreier definierter stabiler Stellungen, die auch bei Wirken einer Gegenkraft gehalten werden können, nur mit sehr erhöhtem konstruktivem Aufwand möglich.

Aufgabe der Erfindung ist es daher, ein Vakuumventil mit einem Verschlussglied, das mittels einer einfach aufgebauten Kolben-Zylinder-Anordnung zwischen einer stabilen ersten, einer stabilen zweiten und einer dazwischen liegenden stabilen mittleren Verschlussgliedstellung verstellbar ist, zur Verfügung zu stellen.

Diese Aufgabe wird durch die Verwirklichung der Merkmale des unabhängigen Anspruchs gelöst. Merkmale, die die Erfindung in alternativer oder vorteilhafter Weise weiterbilden, sind den abhängigen Patentansprüchen zu entnehmen.

Das erfindungsgemässe Vakuumventil umfasst ein erstes Verschlussglied und einem ersten Antrieb, der mindestens eine Kolben-Zylinder-Anordnung aufweist. Der erste Antrieb ist zum Verstellen des ersten Verschlussglieds ausgebildet, wobei die Kolben-Zylinder-Anordnung mit dem ersten Verschlussglied zum Verstellen desselbigen mechanisch gekoppelt ist.

Die Kolben-Zylinder-Anordnung weist eine Zylindereinheit, eine Kolbeneinheit und eine Dichtungseinheit auf.

Die Zylindereinheit hat einen Zylinderinnenraum und eine Innenmantelfläche, wobei der Zylinderinnenraum von der Innenmantelfläche aufgespannt und von dieser insbesondere radial begrenzt wird. Vorzugsweise wird der Zylinderinnenraum axial von zwei Zylinderbodenflächen begrenzt.

Die Kolbeneinheit befindet sich im Zylinderinnenraum und wird von der Innenmantelfläche der Zylindereinheit insbesondere radial umschlossen. Die Kolbeneinheit, die sich insbesondere zwischen den beiden Zylinderbodenflächen befindet, hat eine Aussenmantelfläche, deren Form zumindest in einem ersten und zweiten Abschnitt im Wesentlichen mit der Form der Innenmantelfläche korrespondiert. Die Kolbeneinheit wird von der Aussenmantelfläche und insbesondere zwei Kolbenbodenflächen begrenzt und ist insbesondere massiv oder hohl ausgebildet. Die insbesondere geschlossene Kolbeneinheit ist im Zylinderinnenraum linear relativ zu der Zylindereinheit entlang einer geometrischen Kolbenachse verstellbar. Die Innenmantelfläche und die Aussenmantelfläche erstrecken sich zumindest in einem ersten und zweiten Abschnitt geometrisch entlang der geometrischen Kolbenachse.

Im insbesondere radialen Zwischenraum zwischen der Innenmantelfläche und der Aussenmantelfläche ist die Dichtungseinheit dichtend angeordnet, so dass über die Dichtungseinheit ein gasdichter Kontakt zwischen der Innenmantelfläche und der Aussermantelfläche hergestellt wird. Diese Dichtungseinheit unterteilt somit gemeinsam mit der Kolbeneinheit den Zylinderinnenraum in einen gasdichten ersten Druckraum, der sich axial auf der einen Seite der Kolbeneinheit erstreckt, und einen gasdichten zweiten Druckraum, der sich axial auf der anderen Seite der Kolbeneinheit erstreckt. Der erste Druckraum und der zweite Druckraum sind somit gasdicht voneinander getrennt, wobei die Kolbeneinheit und die Dichtungseinheit als Trennglieder axial zwischen diesen beiden Druckräumen liegen.

Die mindestens eine Kolben-Zylinder-Anordnung ist derart mit dem ersten Verschlussglied mechanisch gekoppelt, dass das erste Verschlussglied durch ein Verändern einer zwischen dem ersten Druckraum und dem zweiten Druckraum herrschenden Druckdifferenz zwischen einer ersten Verschlussgliedstellung und einer zweiten Verschlussgliedstellung verstellbar ist. In der ersten Verschlussgliedstellung sind die Zylindereinheit und die Kolbeneinheit relativ zueinander in einer ersten Relativstellung zueinander positioniert. In der zweiten Verschlussgliedstellung sind die Zylindereinheit und die Kolbeneinheit relativ zueinander in einer zweiten Relativstellung zueinander positioniert. Vorzugsweise ist das Volumen des ersten Druckraums in der ersten Relativstellung oder in der zweiten Relativstellung maximal, während das Volumen im zweiten Druckraum minimal ist.

Abhängig von den wirksamen Angriffsflächen befindet sich die Kolbeneinheit bei einer bestimmten, zwischen den beiden Druckräumen herrschenden Druckdifferenz, insbesondere einer Druckdifferenz gleich null, im Gleichgewicht. Durch Verändern dieser Druckdifferenz in positive oder negative Richtung wird bei Überschreiten einer bestimmten Schwelle ein Verstellen der Kolbeneinheit relativ zu der Zylindereinheit in die erste oder in die zweite Relativstellung bewirkt. Abhängig von der Art der mechanischen Kopplung ist hierbei vorzugsweise entweder die Zylindereinheit oder die Kolbeneinheit ortsfest, wobei das nicht-ortsfeste Element vorzugsweise mit dem ersten Verschlussglied mechanisch gekoppelt ist. Die mechanische Kopplung zwischen der Kolben-Zylinder-Anordnung und dem ersten Verschlussglied kann über eine vorzugsweise feste mechanische Kopplung der Kolbeneinheit oder der Zylindereinheit mit dem ersten Verschlussglied, beispielsweise eine Stangen- oder Gelenkverbindung, erfolgen.

Erfindungsgemäss wird die Dichtungseinheit von einem ersten Dichtungskörper und einem zweiten Dichtungskörper gebildet. Diese beiden Dichtungskörper sind - zumindest innerhalb eines bestimmten Bewegungsbereichs - unabhängig voneinander axial sowohl relativ zu der Zylindereinheit, als auch relativ zu der Kolbeneinheit entlang der geometrischen Kolbenachse verschiebbar. In anderen Worten sind die beiden Dichtungskörper - zumindest innerhalb eines bestimmten Bewegungsbereichs - voneinander entkoppelt und unabhängig voneinander verschiebbar. Die beiden Dichtungskörper bilden gegenüber der Kolbeneinheit und der Zylindereinheit innerhalb dieses Bewegungsbereichs unabhängige Bewegungsglieder. Die freie Beweglichkeit relativ zu der Zylindereinheit und relativ zu der Kolbeneinheit ist aber mittels mehrerer Axialanschläge auf bestimmte relative Bewegungsbereiche begrenzt, wie im Folgenden näher erläutert wird.

Sowohl der erste Dichtungskörper, als auch der zweite Dichtungskörper weisen jeweils eine äussere Dichtfläche und eine innere Dichtfläche auf. Die jeweilige äussere Dichtfläche liegt gasdichtend auf der Innenmantelfläche an und ist relativ zu der Innenmantelfläche axial verschiebbar. Auch die jeweilige innere Dichtfläche liegt gasdichtend auf der Aussenmantelfläche an und ist relativ zu der Aussenmantelfläche axial verschiebbar. In anderen Worten wird mittels der Dichtflächen ein gasdichter Kontakt zwischen dem jeweiligen Dichtungskörper und sowohl der Innenmantelfläche, als auch der Aussenmantelfläche hergestellt, wobei eine relative axiale Verschiebbarkeit unter Beibehaltung des gasdicht abgedichteten Zustands gegeben ist.

Die äussere Dichtfläche des ersten Dichtungskörpers ist innerhalb eines ersten Abschnitts der Innenmantelfläche relativ zur Zylindereinheit axialbeweglich. Auch die äussere Dichtfläche des zweiten Dichtungsträgers ist innerhalb eines zweiten Abschnitts der Innenmantelfläche relativ zur Zylindereinheit axialbeweglich.

Die innere Dichtfläche des ersten Dichtungskörpers ist innerhalb eines ersten Abschnitts der Aussenmantelfläche relativ zur Kolbeneinheit axialbeweglich. Auch die innere Dichtfläche des zweiten Dichtungsträgers ist innerhalb eines zweiten Abschnitts der Aussenmantelfläche relativ zur Kolbeneinheit axialbeweglich.

In einer möglichen Ausführungsform der Erfindung wird der erste Dichtungskörper von einem ersten O-Ring gebildet, wobei auch der zweite Dichtungskörper als ein zweiter O-Ring ausgebildet ist. Die O-Ringe können einen kreisförmigen Dichtungsquerschnitt, jedoch auch jeden anderen Dichtungsquerschnitt, insbesondere einen ovalen oder mehreckigen, insbesondere quadratischen Dichtungsquerschnitt haben. Die nach aussen weisende Fläche des jeweiligen O-Rings wirkt in diesem Fall als die jeweilige äussere Dichtfläche, während die nach innen weisende Fläche des jeweiligen O-Rings als die jeweilige innere Dichtfläche wirkt. Vorzugsweise ist der O-Ring derart dimensioniert und ausgebildet, dass er - ohne sich selbst zu verdrehen - sowohl auf der Innenmantelfläche, als auch auf der Aussenmantelfläche auf gasdichtende Weise gleiten kann.

Alternativ besteht allerdings auch die Möglichkeit, dass der erste Dichtungskörper von einem ersten Dichtungsträger und der zweite Dichtungskörper von einem zweiten Dichtungsträger gebildet werden. Die Dichtungsträger haben beispielsweise einen ringförmigen Querschnitt. Der erste Dichtungskörper hat eine die äussere Dichtfläche bildende äussere Dichtung und eine die innere Dichtfläche bildende innere Dichtung. Auch der zweite Dichtungskörper hat eine die äussere Dichtfläche bildende äussere Dichtung und eine die innere Dichtfläche bildende innere Dichtung. Diese äusseren und inneren Dichtungen können beispielsweise von O-Ringen, welche insbesondere in einer Innen- oder Aussennut des jeweiligen Dichtungsträgers gehalten werden, oder von auf den jeweiligen Dichtungsträger aufvulkanisierten Dichtungen gebildet werden.

Erfindungsgemäss werden die jeweiligen relativen Bewegungsbereiche der beiden Dichtungskörper sowohl relativ zu der Kolbeneinheit, als auch relativ zu der Zylindereinheit auf bestimmte Bereiche begrenzt. Somit wirken die Dichtungskörper innerhalb bestimmter Bewegungsbereiche als Mitnehmer, wobei eine durch den Druck im jeweiligen Druckraum auf die Dichtungskörper wirkende Kraft auf die Kolbeneinheit und/oder auf die Zylindereinheit übertragen wird, so dass Dichtungskörper abhängig von ihrer relativen Stellung mittels Anschlägen entweder mit der Zylindereinheit oder der Kolbeneinheit in eine Richtung gekoppelt sind. Somit wirkt eine auf den jeweiligen Dichtungskörper wirkende Kraft entweder auf die Kolbeneinheit oder die Zylindereinheit, wie im Folgenden erläutert.

Die Zylindereinheit weist einen ersten Axialanschlag und einen zweiten Axialanschlag auf. Beide Axialanschläge sind axialstarr mit der Zylindereinheit gekoppelt.

Der erste Axialanschlag der Zylindereinheit begrenzt die axiale Beweglichkeit des ersten Dichtungskörpers relativ zu der Zylindereinheit auf einen auf der Seite des ersten Druckraums angeordneten ersten Abschnitt der Innenmantelfläche in Richtung zum zweiten Druckraum. In anderen Worten ist der erste Axialanschlag derart auf der Zylindereinheit angeordnet, dass der Bereich der freien axialen Beweglichkeit des ersten Dichtungskörpers auf der Innenmantelfläche der Zylindereinheit in Richtung zum zweiten Druckraum und in Richtung zum zweiten Dichtungskörper begrenzt ist, und zwar auf einen ersten Abschnitt der Innenmantelfläche.

Der zweite Axialanschlag der Zylindereinheit begrenzt die axiale Beweglichkeit des zweiten Dichtungskörpers relativ zu der Zylindereinheit auf einen auf der Seite des zweiten Druckraums angeordneten zweiten Abschnitt der Innenmantelfläche in Richtung zum ersten Druckraum. In anderen Worten ist der zweite Axialanschlag derart auf der Zylindereinheit angeordnet, dass der Bereich der freien axialen Beweglichkeit des zweiten Dichtungskörpers auf der Innenmantelfläche der Zylindereinheit in Richtung zum ersten Druckraum und in Richtung zum ersten Dichtungskörper begrenzt ist, und zwar auf einen zweiten Abschnitt der Innenmantelfläche.

In einer Weiterbildung der Erfindung werden der erste Axialanschlag und der zweite Axialanschlag der Zylindereinheit von mindestens einem in den Zylinderinnenraum nach innen ragenden Absatz, der zwischen dem ersten Abschnitt der Innenmantelfläche und dem zweiten Abschnitt der Innenmantelfläche angeordnet ist und diese beiden Abschnitte insbesondere voneinander trennt, gebildet. Die in Richtung zum ersten Druckraum weisende Seite des nach innen ragenden Absatzes wirkt als erster Axialanschlag und die in Richtung zum zweiten Druckraum weisende Seite des nach innen ragenden Absatzes wirkt als zweiter Axialanschlag. Dieser nach innen ragende Absatz wird insbesondere von einer kragenförmigen Verjüngung gebildet, die rings innerhalb der Innenmantelfläche - insbesondere durchgehend ringförmig - verläuft oder in Form mehrerer Absätze ausgestaltet ist.

In einer weiteren Weiterbildung der Erfindung weist der mindestens eine nach innen ragende Absatz Übergange zu dem ersten Abschnitt der Innenmantelfläche und dem zweiten Abschnitt der Innenmantelfläche auf, wobei die Form der Übergänge der Form des ersten Dichtungskörpers und des zweiten Dichtungskörpers entsprechen, so dass die Dichtungskörper gleichmässig auf dem Absatz zum liegen kommen. Im Falle von O-Ringen mit kreisrundem Dichtungsquerschnitt entsprechen die Übergänge des nach innen ragenden Absatzes im Wesentlichen dem Radius der O-Ringe.

Die beiden Dichtungskörper können also relativ zu der Zylindereinheit aufeinander zu und voneinander weg bewegt werden, wobei der erste und der zweite Axialanschlag der Zylindereinheit den Mindestabstand der beiden Dichtungskörper zueinander begrenzen. Der erste und der zweite Axialanschlag unterteilen die Innenmantelfläche somit in einen ersten Abschnitt für den ersten Dichtungskörper und einen zweiten Abschnitt für den zweiten Dichtungskörper.

Auch die Kolbeneinheit weist zwei Axialanschläge für die beiden Dichtungskörper auf, nämlich einen dritten Axialanschlag und einen vierten Axialanschlag.

Der dritte Axialanschlag der Kolbeneinheit begrenzt die axiale Beweglichkeit des ersten Dichtungskörpers relativ zu der Kolbeneinheit auf einen auf der Seite des ersten Druckraums angeordneten ersten Abschnitt der Aussenmantelfläche in Richtung zum zweiten Druckraum. In anderen Worten ist der dritte Axialanschlag derart auf der Kolbeneinheit angeordnet, dass der Bereich der freien axialen Beweglichkeit des ersten Dichtungskörpers auf der Aussenmantelfläche der Kolbeneinheit in Richtung zum zweiten Druckraum und in Richtung zum zweiten Dichtungskörper begrenzt ist, und zwar auf einen ersten Abschnitt der Aussenmantelfläche.

Der vierte Axialanschlag der Kolbeneinheit begrenzt die axiale Beweglichkeit des zweiten Dichtungskörpers relativ zu der Kolbeneinheit auf einen auf der Seite des zweiten Druckraums angeordneten zweiten Abschnitt der Aussenmantelfläche in Richtung zum ersten Druckraum. In anderen Worten ist der vierte Axialanschlag derart auf der Kolbeneinheit angeordnet, dass der Bereich der freien axialen Beweglichkeit des zweiten Dichtungskörpers auf der Aussenmantelfläche der Kolbeneinheit in Richtung zum ersten Druckraum und in Richtung zum ersten Dichtungskörper begrenzt ist, und zwar auf einen zweiten Abschnitt der Aussenmantelfläche.

In einer Weiterbildung der Erfindung werden der dritte Axialanschlag und der vierte Axialanschlag der Kolbeneinheit von mindestens einem nach aussen ragenden Absatz, der zwischen dem ersten Abschnitt der Aussenmantelfläche und dem zweiten Abschnitt der Aussenmantelfläche angeordnet ist und diese beiden Abschnitte insbesondere voneinander trennt, gebildet. Die in Richtung zum ersten Druckraum weisende Seite des nach aussen ragenden Absatzes wirkt als dritter Axialanschlag und die in Richtung zum zweiten Druckraum weisende Seite des nach aussen ragenden Absatzes wirkt als vierter Axialanschlag. Dieser nach aussen ragende Absatz wird insbesondere von einer kragenförmigen Ausweitung gebildet, die durchgehend rings ausserhalb um die Aussenmantelfläche verläuft oder in Form mehrerer Absätze ausgestaltet ist.

In einer weiteren Weiterbildung der Erfindung weist der mindestens eine nach aussen ragende Absatz Übergange zu dem ersten Abschnitt der Aussenmantelfläche und dem zweiten Abschnitt der Aussenmantelfläche auf, wobei die Form der Übergänge der Form des ersten Dichtungskörpers und des zweiten Dichtungskörpers entsprechen, so dass die Dichtungskörper gleichmässig auf dem Absatz zum liegen kommen. Im Falle von O-Ringen mit kreisrundem Dichtungsquerschnitt entsprechen die Übergänge des nach aussen ragenden Absatzes im Wesentlichen dem Radius der O-Ringe.

Die beiden Dichtungskörper können also relativ zu der Kolbeneinheit aufeinander zu und voneinander weg bewegt werden, wobei der dritte und der vierte Axialanschlag der Kolbeneinheit den Mindestabstand der beiden Dichtungskörper zueinander begrenzen. Der dritte und der vierte Axialanschlag unterteilen die Aussenmantelfläche somit in einen ersten Abschnitt für den ersten Dichtungskörper und einen zweiten Abschnitt für den zweiten Dichtungskörper.

Der erste Axialanschlag der Zylindereinheit und der dritte Axialanschlag der Kolbeneinheit sind derart relativ zueinander angeordnet, dass in einer zwischen der ersten Relativstellung und der zweiten Relativstellung liegenden, einer mittlere Verschlussgliedstellung entsprechenden mittleren Relativstellung der Zylindereinheit und der Kolbeneinheit relativ zueinander die axiale Beweglichkeit des ersten Dichtungskörpers in Richtung zum zweiten Druckraum gemeinsam von dem ersten Axialanschlag und dem dritten Axialanschlag begrenzt ist.

In anderen Worten liegen in einer mittleren Relativstellung der Zylindereinheit und der Kolbeneinheit relativ zueinander der erste Axialanschlag der Zylindereinheit und der dritte Axialanschlag der Kolbeneinheit derart relativ zueinander und befinden sich insbesondere in einer derartigen Gegenüberlage, dass der erste und der dritte Axialanschlag in dieser mittleren Relativstellung als ein gemeinsamer Axialanschlag für den ersten Dichtungskörper wirken und der erste Dichtungskörper auf sowohl dem ersten Axialanschlag, als auch dem dritten Axialanschlag in Richtung zum zweiten Druckraum und zum zweiten Dichtungskörper aufliegen kann.

Auch der zweite Axialanschlag der Zylindereinheit und der vierte Axialanschlag der Kolbeneinheit sind derart relativ zueinander angeordnet, dass in der mittleren Relativstellung die axiale Beweglichkeit des zweiten Dichtungskörpers in Richtung zum ersten Druckraum gemeinsam von dem zweiten Axialanschlag und dem vierten Axialanschlag begrenzt ist.

In anderen Worten liegen in der mittleren Relativstellung der Zylindereinheit und der Kolbeneinheit relativ zueinander der zweite Axialanschlag der Zylindereinheit und der vierte Axialanschlag der Kolbeneinheit derart relativ zueinander und befinden sich insbesondere in einer derartigen Gegenüberlage, dass der zweite und der vierte Axialanschlag in dieser mittleren Relativstellung als ein gemeinsamer Axialanschlag für den zweiten Dichtungskörper wirken und der zweite Dichtungskörper auf sowohl dem zweiten Axialanschlag, als auch dem vierten Axialanschlag in Richtung zum ersten Druckraum und zum ersten Dichtungskörper aufliegen kann.

Die Bewegungsbereiche der beiden Dichtungskörper und die Abschnitte der Innen- bzw. Aussenmantelfläche werden, wie oben beschrieben, in Richtung aufeinender zu von den vier Axialanschlägen begrenzt. Eine Begrenzung nach aussen mittels weiterer Axialanschläge, insbesondere mittels weiterer vier Axialanschläge, ist nicht unbedingt erforderlich, jedoch möglich.

In einer Weiterbildung der Erfindung sind in der mittleren Relativstellung der erste Axialanschlag und der dritte Axialanschlag in einer radialen Gegenüberlage in Bezug auf die Kolbenachse angeordnet, wobei in dieser mittleren Relativstellung auch der zweite Axialanschlag und der vierte Axialanschlag in einer radialer Gegenüberlage in Bezug auf die Kolbenachse angeordnet sind.

In einer möglichen Ausführungsform haben die Zylindereinheit mit ihrem ersten Abschnitt und ihrem zweiten Abschnitt der Innenmantelfläche, sowie die Kolbeneinheit mit ihrem ersten Abschnitt und ihrem zweiten Abschnitt der Aussenmantelfläche einen kreisförmigen Querschnitt in einer von der geometrischen Kolbeachse senkrecht durchstossenen geometrischen Schnittebene. In anderen Worten haben die ersten und zweiten Abschnitte der Innen- und Aussenmantelfläche, auf welchen die äusseren bzw. inneren Dichtflächen der Dichtungskörper auf gasdichte axiale Weise gleiten können, jeweils einen kreisförmigen Querschnitt in geometrischen Schnittebenen, die von der geometrischen Kolbeachse senkrecht durchstossenen werden. Andere, insbesondere ovale Querschnitte sind ebenfalls möglich, jedoch - abhängig von der Herstellungsmethode - mit einem erhöhten Fertigungsaufwand verbunden.

Zwischen dem ersten Dichtungskörper und dem zweiten Dichtungskörper wird ein mittlerer Zylinderinnenraum gebildet, der sich zwischen dem ersten und dem zweiten Druckraum befindet und der gasdicht von diesen beiden Druckräumen durch die Dichtungskörper getrennt ist. Da sich das Volumen dieses mittleren Zylinderinnenraums beim Ändern des Abstandes der beiden Dichtungskörper verändert, wenn einer der Dichtungskörper verschoben wird, muss eine Be- bzw. Entlüftungsmöglichkeit dieses mittleren Zylinderinnenraums gegeben sein. Dies kann durch eine Öffnung des mittleren Zylinderinnenraums nach aussen erzielt werden. In einer möglichen Ausführungsform der Erfindung wird die Entlüftung des mittleren Zylinderinnenraums durch mindestens einen von dem mittleren Zylinderinnenraum aus der Zylindereinheit heraus führenden Entlüftungskanal, der insbesondere die umgebende Atmosphäre mündet, bewirkt.

Mittels der erfindungsgemässen, begrenzt freien Beweglichkeit der beiden Dichtungskörper wird erreicht, dass die Zylindereinheit relativ zu der Kolbeneinheit in eine stabile, definierte Mittelstellung, nämlich die mittlere Relativstellung zwischen der ersten und der zweiten Relativstellung, verstellt werden kann, indem beide Druckräume mit Druck, insbesondere mit im Wesentlichen dem gleichen Druck beaufschlagt werden.

Das Verstellen der Kolben-Zylinder-Anordnung in die drei Relativstellungen wird im Folgenden anhand einer feststehenden Zylindereinheit und einer beweglichen Kolbeneinheit beschrieben. Eine kinematische Umkehr mit einer beweglichen Zylindereinheit und einer feststehenden Kolbeneinheit oder einer beweglichen Zylindereinheit und einer beweglichen Kolbeneinheit sich aber ebenfalls möglich und werden von der Erfindung umfasst.

Insbesondere sind die effektiven Druckangriffsflächen der Kolbeneinheit im ersten Druckraum und im zweiten Druckraum gleich. Insbesondere sind auch die effektiven Druckangriffsflächen des ersten Dichtungskörpers im ersten Druckraum und des zweiten Dichtungskörpers im zweiten Druckraum gleich. Insbesondere sind die effektiven Druckangriffsflächen der Kolbeneinheit in den Druckräumen grösser als die effektiven Druckangriffsflächen der Dichtungskörper in den Druckräumen.

In der ersten Relativstellung ist die Kolbeneinheit in Richtung zum ersten Druckraum verstellt. Das Volumen des ersten Druckraums ist verkleinert, insbesondere minimal, und das Volumen des zweiten Druckraums ist vergrössert, insbesondere maximal. Der Druck im zweiten Druckraum ist wesentlich erhöht, insbesondere ist der Druck im zweiten Druckraum wesentlich grösser als der Druck im ersten Druckraum. Aufgrund des wesentlich relativ erhöhten Drucks im zweiten Druckraum wird die Kolbeneinheit in Richtung zum ersten Druckraum gedrückt und dort, in der ersten Relativstellung, stabil gehalten. Insbesondere im zweiten Druckraum, insbesondere in beiden Druckräumen herrscht relativ zum Druck im mittleren Zylinderinnenraum, insbesondere zur umgebenden Atmosphäre, ein relativer Überdruck, so dass insbesondere beide Dichtungseinheiten aufeinander zu, also in Richtung zum ersten bzw. zweiten Axialanschlag gedrückt werden.

Der erste Dichtungskörper liegt auf dem dritten Axialanschlag der Kolbeneinheit auf. Der Druck im ersten Druckraum wirkt also sowohl über die effektive Druckangriffsfläche der Kolbeneinheit, als auch über die effektive Druckangriffsfläche des ersten Dichtungskörpers auf die Kolbeneinheit in Richtung zum zweiten Druckraum. Der zweite Dichtungskörper liegt aber auf dem zweiten Axialanschlag der Zylindereinheit auf. Der Druck im zweiten Druckraum wirkt also nur über die effektive Druckangriffsfläche der Kolbeneinheit auf die Kolbeneinheit in Richtung zum ersten Druckraum, und nicht über den zweiten Dichtungskörper, da sich dieser über den zweiten Axialanschlag auf der Zylindereinheit abstützt.

In der ersten Relativstellung - und im Bereich zwischen der ersten Relativstellung und der mittleren Relativstellung - ist somit die auf die Kolbeneinheit wirkende, wirksame Druckangriffsfläche im ersten Druckraum grösser als die auf die Kolbeneinheit wirkende, wirksame Druckangriffsfläche im zweiten Druckraum, da auf der Seite des ersten Druckraums auch die wirksame Druckangriffsfläche des ersten Dichtungskörpers auf die Kolbeneinheit wirkt.

Die Anordnung des zweiten Abschnitts der Aussenmantelfläche der Kolbeneinheit und des zweiten Axialanschlags der Zylindereinheit ist also derart, dass innerhalb dieses Bereichs zwischen der ersten Relativstellung und der mittleren Relativstellung der zweite Dichtungskörper mit seiner äusseren Dichtfläche relativ zum zweiten Abschnitt der Innenmantelfläche der Kolbeneinheit still steht, da er am zweiten Axialanschlag anliegt, während bei Bewegung der Kolbeneinheit der zweite Abschnitt der Aussenmantelfläche der Kolbeneinheit auf der inneren Dichtfläche des zweiten Dichtungskörpers gleitet. Die Anordnung des ersten Abschnitts der Innenmantelfläche der Zylindereinheit und des dritten Axialanschlags der Kolbeneinheit ist insbesondere derart, dass der erste Dichtungskörper innerhalb dieses Bereichs mit seiner inneren Dichtfläche relativ zum ersten Abschnitt der Aussenmantelfläche der Kolbeneinheit still steht, da er am dritten Axialanschlag anliegt, während bei Bewegung der Kolbeneinheit der erste Dichtungskörper mit seiner äusseren Dichtfläche auf dem ersten Abschnitt der Innenmantelfläche der Zylindereinheit gleitet.

Damit sich also die Kolbeneinheit von der mittleren Relativstellung in die erste Relativstellung bewegt und in dieser ersten Relativstellung gehalten wird, muss der Druck im zweiten Druckraum wesentlich relativ erhöht sein, da die auf die Kolbeneinheit wirkende, wirksame Druckangriffsfläche im zweiten Druckraum im Bewegungsbereich zwischen der mittleren und der ersten Relativstellung reduziert ist.

In der zweiten Relativstellung, in der die Kolbeneinheit in Richtung zum zweiten Druckraum verstellt ist, verhält es sich entsprechend umgekehrt. Das Volumen des zweiten Druckraums ist verkleinert, insbesondere minimal, und das Volumen des ersten Druckraums ist vergrössert, insbesondere maximal. Der Druck im ersten Druckraum ist relativ zum Druck im zweiten Druckraum wesentlich erhöht, insbesondere ist der Druck im ersten Druckraum wesentlich grösser als der Druck im zweiten Druckraum. Aufgrund des wesentlich relativ erhöhten Drucks im ersten Druckraum wird die Kolbeneinheit in Richtung zum zweiten Druckraum gedrückt und dort, in der zweiten Relativstellung, stabil gehalten.

Der zweite Dichtungskörper liegt auf dem vierten Axialanschlag der Kolbeneinheit auf. Der Druck im zweiten Druckraum wirkt also sowohl über die effektive Druckangriffsfläche der Kolbeneinheit, als auch über die effektive Druckangriffsfläche des zweiten Dichtungskörpers auf die Kolbeneinheit in Richtung zum ersten Druckraum. Der erste Dichtungskörper liegt aber auf dem ersten Axialanschlag der Zylindereinheit auf. Der Druck im ersten Druckraum wirkt also nur über die effektive Druckangriffsfläche der Kolbeneinheit auf die Kolbeneinheit in Richtung zum zweiten Druckraum, und nicht über den ersten Dichtungskörper, da sich dieser über den ersten Axialanschlag auf der Zylindereinheit abstützt.

In der zweiten Relativstellung - und im Bereich zwischen der zweiten Relativstellung und der mittleren Relativstellung - ist somit die auf die Kolbeneinheit wirkende, wirksame Druckangriffsfläche im zweiten Druckraum grösser als die auf die Kolbeneinheit wirkende, wirksame Druckangriffsfläche im ersten Druckraum.

Die Anordnung des ersten Abschnitts der Aussenmantelfläche der Kolbeneinheit und des ersten Axialanschlags der Zylindereinheit ist also derart, dass innerhalb dieses Bereichs zwischen der zweiten Relativstellung und der mittleren Relativstellung der erste Dichtungskörper mit seiner äusseren Dichtfläche relativ zum ersten Abschnitt der Innenmantelfläche der Kolbeneinheit still steht, da er am ersten Axialanschlag anliegt, während bei Bewegung der Kolbeneinheit der erste Abschnitt der Aussenmantelfläche der Kolbeneinheit auf der inneren Dichtfläche des ersten Dichtungskörpers gleitet. Die Anordnung des zweiten Abschnitts der Innenmantelfläche der Zylindereinheit und des vierten Axialanschlags der Kolbeneinheit ist insbesondere derart, dass der zweite Dichtungskörper innerhalb dieses Bereichs mit seiner inneren Dichtfläche relativ zum zweiten Abschnitt der Aussenmantelfläche der Kolbeneinheit still steht, da er am vierten Axialanschlag anliegt, während bei Bewegung der Kolbeneinheit der zweite Dichtungskörper mit seiner äusseren Dichtfläche auf dem zweiten Abschnitt der Innenmantelfläche der Zylindereinheit gleitet.

Damit sich also die Kolbeneinheit von der mittleren Relativstellung in die zweite Relativstellung bewegt und in dieser zweiten Relativstellung gehalten wird, muss der Druck im ersten Druckraum wesentlich relativ erhöht sein, da die auf die Kolbeneinheit wirkende, wirksame Druckangriffsfläche im ersten Druckraum im Bewegungsbereich zwischen der mittleren und der zweiten Relativstellung reduziert ist.

Diese beschriebene Anordnung der Axialanschläge, Dichtungskörper und Mantelflächen bewirkt, dass zum Verstellen der Kolbeneinheit aus der mittleren Relativstellung in Richtung zur ersten oder gegenüberliegenden zweiten Relativstellung eine wesentliche relative Druckerhöhung in einem der beiden Druckräume erforderlich ist, da sich bei Verlassen der mittleren Reaktivstellung aufgrund der grösser werdenden, wirksamen Druckangriffsfläche die entgegengesetzt wirkende Kraft erhöht. Die Kolbeneinheit befindet sich somit in der mittleren Relativstellung in einem stabilen Gleichgewicht. Innerhalb eines - abhängig vom Verhältnis der Druckangriffsflächen der Dichtungskörper und der Kolbeneinheit - grossen Bereichs eines Differenzdrucks zwischen dem ersten Druckraum und dem zweiten Druckraum bleibt die Kolbeneinheit stabil in der mittleren Relativstellung. Erst bei Überschreiten oder Unterschreiten dieses grossen mittleren Druckdifferenzbereichs wird der Kolben in die erste oder zweite Relativstellung verstellt.

Somit ist es mittels einer einfachen, insbesondere pneumatischen Steuerung möglich, die Kolbeneinheit durch wechselweises oder gleichzeitiges Beaufschlagen des ersten und des zweiten Druckraums mit relativem Überdruck zwischen der ersten Relativstellung, der zweiten Relativstellung und der mittlerer Relativstellung zu verstellen, wobei die jeweiligen Stellungen stabil gehalten werden. In der ersten und zweiten Relativstellung wird der jeweils nicht mit erhöhtem Druck beaufschlagte Druckraum entweder drucklos mit der Atmosphäre verbunden oder mit einem - relativ zum erhöhten Druck des gegenüberliegenden Druckraums - wesentlich geringeren Druck beaufschlagt. Die Beaufschlagung mit einem geringeren Gegendruck ist zwar nicht bei allen Anwendungen zwangsläufig erforderlich, jedoch in bestimmten Anwendungen aus Dämpfungsgründen und zur Entlastung und Schonung der Dichtungskörper, insbesondere zum Halten der Dichtungskörper am jeweiligen Axialanschlag, von Vorteil.

Das erfindungsgemässe Vakuumventil hat in einer Variante der Erfindung eine erste Ventilwand, die eine erste Öffnung und einen die erste Öffnung umlaufenden ersten Ventilsitz aufweist.

Dieses Vakuumventil dient beispielsweise zum gasdichten Schliessen eines Fliesswegs und umfasst vorzugsweise ein Ventilgehäuse mit der ersten Ventilwand, welche die erste Öffnung für den Fliessweg aufweist. Unter dem Fliessweg ist allgemein ein zu schliessender Öffnungspfad zwischen zwei Bereichen zu verstehen.

Die erste Öffnung kann einen beliebigen, insbesondere rechteckigen, kreisrunden oder ovalen Querschnitt aufweisen. Ist das Vakuumventil ein Transferventil, hat es vorzugsweise einen länglichen, insbesondere im Wesentlichen rechteckigen Öffnungsquerschnitt, wobei die Breite der Öffnung vorzugsweise mindestens das Doppelte oder mindestens das Dreifache oder mindestens das Fünffache der Höhe der Öffnung beträgt. Es ist jedoch auch möglich, den Öffnungsquerschnitt anders auszugestalten, beispielsweise kreisrund, wobei das Vakuumventil zum Beispiel ein Pumpenventil ist. Die Öffnung hat eine Mittelachse, die sich im Bereich der Öffnung in der Mitte des Fliesswegs parallel zu diesem erstreckt. Diese geometrische Öffnungsachse steht beispielsweise senkrecht auf der von der Öffnung aufgespannten Fläche und erstreckt sich entlang des Fliesswegs.

Das erste Verschlussglied weist in dieser Variante der Erfindung eine erste Verschlussseite zum im Wesentlichen gasdichten Verschliessen der ersten Öffnung auf. Der erste Antrieb mit der oben beschriebenen Kolben-Zylinder-Anordnung ist derart ausgebildet und mit dem ersten Verschlussglied gekoppelt, dass das erste Verschlussglied mittels des ersten Antriebs - in Form einer so genannten Längsbewegung - senkrecht zum ersten Ventilsitz zwischen der zweiten Verschlussgliedstellung, welche der zweiten Relativstellung der Zylinder- und Kolbeneinheit entspricht, der mittleren Verschlussgliedstellung, welche der mittleren Relativstellung entspricht, und der ersten Verschlussgliedstellung, welche der ersten Relativstellung entspricht, verstellbar ist. In der zweiten Verschlussgliedstellung befindet sich die erste Verschlussseite in einer beabstandeten Gegenüberlage zum ersten Ventilsitz. In der ersten Verschlussgliedstellung ist dieser Abstand auf ein Minimum reduziert und die erste Verschlussseite ist im Wesentlichen senkrecht auf den ersten Ventilsitz angedrückt, wobei die erste Öffnung und somit der Fliessweg im Wesentlichen gasdicht von der erste Verschlussseite verschlossen ist.

In der mittleren Verschlussgliedstellung befindet sich die erste Verschlussseite in einer Variante ebenfalls in einer beabstandeten Gegenüberlage zum ersten Ventilsitz, wobei der Abstand zum ersten Ventilsitz bei der zweiten Verschlussgliedstellung grösser ist als bei der mittleren Verschlussgliedstellung. In diesem Falle wirkt der erfindungsgemässe Antrieb, sofern das Vakuumventil nur eine zu schliessende Öffnung aufweist, als zweistufiger Längsantrieb zum Verstellen des ersten Verschlussglieds in senkrechte Richtung zum ersten Ventilsitz, wobei der Öffnungsquerschnitt in zwei Stufen reduziert werden kann.

Alternativ ist die erste Verschlussseite auch in der mittleren Verschlussgliedstellung im Wesentlichen senkrecht auf den ersten Ventilsitz angedrückt, wobei die erste Öffnung und somit der Fliessweg im Wesentlichen gasdicht von der ersten Verschlussseite verschlossen ist. In diesem Fall ist aber die Anpresskraft auf den Ventilsitz in der mittleren Verschlussgliedstellung reduziert, wobei durch den Wechsel von der mittleren zur ersten Verschlussgliedstellung von einer geringeren auf eine höhere Anpresskraft auf die insbesondere elastische Hauptdichtung des Ventils umgeschaltet werden kann, beispielsweise bei einer erhöhten Druckdifferenz am ersten Verschlussglied.

In einer Weiterbildung der Erfindung ist das Vakuumventil als ein so genanntes Doppelventil ausgebildet. Das Vakuumventil hat beabstandet gegenüberliegend zur ersten Ventilwand eine zweite Ventilwand, die eine zweite Öffnung und einen die zweite Öffnung umlaufenden, dem ersten Ventilsitz beanstandet gegenüberliegenden zweiten Ventilsitz aufweist. Ausserdem besitzt das Vakuumventil ein zweites Verschlussglied. Das zweite Verschlussglied hat eine zweite Verschlussseite, die in zur ersten Verschlussseite entgegengesetzte Richtung weist, zum im Wesentlichen gasdichten Verschliessen der zweiten Öffnung. Das zweite Verschlussglied ist mechanisch mit dem ersten Verschlussglied gekoppelt und gemeinsam mit dem ersten Verschlussglied mittels der mindestens einen Kolben-Zylinder-Anordnung verstellbar. Insbesondere werden die beiden Verschlussglieder von zwei beabstandet gegenüberliegenden Verschlussplatten gebildet. Es ist jedoch auch möglich, dass das erste Verschlussgliede und das zweite Verschlussglied von einem einzigen Verschlussglied, das zwei gegenüberliegende Verschlussseiten hat, gebildet werden.

Mittels der Kolben-Zylinder-Anordnung ist sowohl das erste Verschlussglied, als auch das zweite Verschlussglied mit seiner zweiten Verschlussseite zwischen der ersten Verschlussgliedstellung, der mittleren Verschlussgliedstellung und der zweiten Verschlussgliedstellung verstellbar.

In der ersten Verschlussgliedstellung befindet sich die zweite Verschlussseite des zweiten Verschlussglieds in einer beabstandeten Gegenüberlage zum zweiten Ventilsitz, während der Abstand zwischen dem ersten Verschlussglied und dem ersten Ventilsitz auf ein Minimum reduziert ist und die erste Verschlussseite im Wesentlichen senkrecht auf den ersten Ventilsitz angedrückt ist, wobei die erste Öffnung von der ersten Verschlussseite des ersten Verschlussglieds gasdicht verschlossen ist. In der mittleren Verschlussgliedstellung befinden sich die erste Verschlussseite und die zweite Verschlussseite jeweils in einer beabstandeten Gegenüberlage zum ersten bzw. zweiten Ventilsitz. In der zweiten Verschlussgliedstellung ist die zweite Verschlussseite im Wesentlichen senkrecht auf den zweiten Ventilsitz angedrückt und verschliesst die zweite Öffnung im Wesentlichen gasdicht, während sich die erste Verschlussseite des ersten Verschlussglieds in einer beabstandeten Gegenüberlage zum ersten Ventilsitz befindet.

Es ist möglich, dass anstelle einer einzigen Kolben-Zylinder-Anordnung mehrere, insbesondere parallel zueinander angeordnete Kolben-Zylinder-Anordnungen zum Einsatz kommen. Insbesondere im Falle eines Doppelventils können beispielsweise vier rechteckig zueinander angeordnete Kolben-Zylinder-Anordnungen in den Eckbereichen der beiden insbesondere rechteckigen Verschlussglieder positioniert sein, wodurch eine hohe Stabilität erreicht wird. Die jeweiligen ersten und zweiten Druckräume können jeweils miteinander verbunden sein, oder die parallel geschalteten Kolben-Zylinder-Anordnungen teilen sich einen gemeinsamen ersten und einen gemeinsamen zweiten Druckraum.

In einer Weiterbildung dieses erfindungsgemässen Doppelventils ist an der Kolbeneinheit eine durch den ersten Druckraum hindurch geführte und gasdicht aus der Zylindereinheit axialbeweglich hinaus geführte erste Kolbenstange und eine durch den zweiten Druckraum hindurch geführte und gasdicht aus der Zylindereinheit axialbeweglich hinaus geführte zweite Kolbenstange angeordnet. An dem aus der Zylindereinheit hindurch geführten Ende der ersten Kolbenstange befindet sich das erste Verschlussglied. An dem aus der Zylindereinheit hindurch geführten Ende der zweiten Kolbenstange ist das zweite Verschlussglied angeordnet. Zwischen der ersten Verschlussseite und der zweiten Verschlussseite, insbesondere zwischen den beiden Verschlussplatten, befindet sich die oben beschriebene, erfindungsgemässe Kolben-Zylinder-Anordnung.

Eine Fortführung der Erfindung sieht vor, dass die Kolben-Zylinder-Anordnung an einer Verbindungsstange angeordnet ist, wobei das erste Verschlussglied und insbesondere auch das zweite Verschlussglied relativ zu dieser Verbindungsstange verstellbar sind. Insbesondere dient die Kolben-Zylinder-Anordnung als ein Längsantrieb zum Verstellen des mindestens einen Verschlussglieds in Richtung senkrecht zum jeweiligen Ventilsitz, wobei die Verbindungsstange mit der Kolben-Zylinder-Anordnung und dem mindestens einen Verschlussglied wiederum mittels eines als Querantrieb wirkenden, zweiten Antriebs quer zum jeweiligen Ventilsitz verstellbar ist.

Hierzu sind ein erster Abschnitt der Verbindungsstange mit der Kolben-Zylinder-Anordnung und ein zweiter Abschnitt der Verbindungsstange mit einem zweiten Antrieb gekoppelt. Der erste Abschnitt der Verbindungsstange ist beispielsweise das erste Ende und der zweite Abschnitt der Verbindungsstange ist beispielsweise das zweite Ende der Verbindungsstange, die insbesondere als Schub- oder Schwenkstange oder -arm ausgebildet sein kann.

In einer weiteren Fortführung der Erfindung hat die oben beschriebene Verbindungsstange eine erste Druckleitung und eine zweite Druckleitung, die sich jeweils zwischen dem ersten Abschnitt und dem zweiten Abschnitt erstrecken und die insbesondere von in der Verbindungsstange verlaufenden Kanälen gebildet werden. Die erste Druckleitung führt im ersten Abschnitt in den ersten Druckraum und im zweiten Abschnitt zu einem ersten Druckanschluss. Die zweite Druckleitung führt im ersten Abschnitt in den zweiten Druckraum und im zweiten Abschnitt zu einem zweiten Druckanschluss.

Der zweite Antrieb ist derart ausgebildet und mit der mindestens einen Verbindungsstange gekoppelt, dass die Kolben-Zylinder-Anordnung und das erste Verschlussglied, insbesondere quer zu der geometrischen Kolbenachse, entlang einer Längsverstellachse verstellbar oder um eine Schwenkachse schwenkbar sind.

Der zweite Antrieb ist in einer Weiterbildung der Erfindung derart ausgebildet und mit der Verbindungsstange gekoppelt, dass das erste Verschlussglied mittels des zweiten Antriebs quer zum ersten Ventilsitz und insbesondere auch zum zweiten Ventilsitz zwischen einer Offenposition und der Zwischenposition verstellbar ist. In der Offenposition gibt das erste Verschlussglied die erste Öffnung und insbesondere die zweite Öffnung frei. In der Zwischenposition überdeckt das erste Verschlussglied die erste Öffnung und insbesondere das zweite Verschlussglied die zweite Öffnung, wobei sich die erste Verschlussseite in einer Gegenüberlage zum ersten Ventilsitz und insbesondere die zweite Verschlussseite in einer Gegenüberlage zum zweiten Ventilsitz befinden, wie oben beschrieben.

Der zweite Antrieb kann insbesondere als Linearantrieb zum linearen Verstellen des ersten Verschlussglieds quer zum ersten Ventilsitz zwischen der Offenposition und der Zwischenposition entlang einer Längsverstellachse ausgebildet sein, wobei das Vakuumventil insbesondere ein Schieberventil ist. Dieser als Linearantrieb ausgebildete zweite Antrieb kann von einer herkömmlichen Kolben-Zylinder-Anordnung, einem elektrischen Linearantrieb, einem sonstigen Linearantrieb oder der oben beschriebenen, erfindungsgemässen Kolben-Zylinder-Anordnung gebildet werden.

Alternativ kann der zweite Antrieb ein Schwenkantrieb zum Schwenken des ersten Verschlussglieds quer zum ersten Ventilsitz zwischen der Offenposition und der Zwischenposition um eine Schwenkachse sein, wobei das Vakuumventil insbesondere als Pendelventil ausgebildet ist. Als Schwenkantrieb eignen sich nicht nur insbesondere elektrische Schwenkantriebe, sondern auch mit einem Schwenkarm verbundene Linearantriebe, insbesondere auch herkömmliche Kolben-Zylinder-Anordnungen, aber auch die erfindungsgemässe Kolben-Zylinder-Anordnung.

Der erste Antrieb mit der erfindungsgemässen Kolben-Zylinder-Anordnung kann nicht nur, wie oben beschrieben, im Vakuumbereich des Vakuumventils, insbesondere direkt an dem Verschlussglied, beispielsweise zwischen dem ersten und dem zweiten Verschlussglied, angeordnet sein, sondern auch ausserhalb des Vakuumbereichs des Vakuumventils, beispielsweise in einem Antriebsgehäuse. In diesem Fall ist die ausserhalb des Vakuumbereichs angeordnete Kolben-Zylinder-Anordnung beispielsweise mit einer Verbindungsstange verbunden, die auf gasdichtende Weise in den Vakuumbereich des Vakuumventils hineingeführt ist, wobei am anderen Ende der Verbindungsstange das erste Verschlussglied, insbesondere auch das zweite Verschlussglied, angeordnet sind. Diese Kolben-Zylinder-Anordnung kann den Längs- oder Querantrieb des Vakuumventils bilden.

Der oben beschriebene, durch die erste Öffnung und insbesondere auch durch die zweite Öffnung führende Fliessweg ist beispielsweise ein Verbindungsgang zwischen zwei miteinander verbundenen Prozesskammern, wobei die Prozesskammern mittels des Vakuumventils zum Transfer der Halbleiterteile von der einen zur nächsten Prozesskammer geöffnet und im Anschluss zur Durchführung des jeweiligen Fertigungsschritts gasdicht verschlossen werden können. Derartige Schieberventile werden aufgrund des beschriebenen Anwendungsgebiets auch als Vakuum-Transferventile und aufgrund ihres meist rechteckigen Öffnungsquerschnitts auch als Rechteckschieber bezeichnet. Selbstverständlich ist jedoch auch jede beliebige andere Anwendung des erfindungsgemässen Vakuumventils insbesondere zum im Wesentlichen gasdichten Schliessen eines beliebigen Fliesswegs möglich.

Das erfindungsgemässe Vakuumventil wird nachfolgend anhand von in den Zeichnungen schematisch dargestellten konkreten Ausführungsbeispielen rein beispielhaft näher beschrieben.

Im Einzelnen zeigen:
- Figur 1a: eine erste Ausführungsform der Kolben-Zylinder-Anordnung des Vakuumventils mit einem ersten und einem zweiten O-Ring in einer schematischen Detailansicht in einer ersten Relativstellung;
- Figur 1b: die erste Ausführungsform aus Figur 1a in einer mittleren Relativstellung;
- Figur 1c: die erste Ausführungsform aus Figur 1a in einer zweiten Relativstellung;
- Figur 2a: eine zweite Ausführungsform der Kolben-Zylinder-Anordnung des Vakuumventils mit einem ersten und einem zweiten Dichtungsträger in einer schematischen Detailansicht in einer ersten Relativstellung;
- Figur 2b: die zweite Ausführungsform aus Figur 2a in einer mittleren Relativstellung;
- Figur 2c: die zweite Ausführungsform aus Figur 2a in einer zweiten Relativstellung;
- Figur 3a: eine erfindungsgemässen Vakuumventils in einem Längsschnitt in einer Offenposition;
- Figur 3b: das Vakuumventil in einem mittleren Querschnittschnitt durch die Verbindungsstange in der Offenposition;
- Figur 3c: das Vakuumventil in einem seitlichen Querschnittschnitt durch die Kolben-Zylinder-Anordnung in der Offenposition;
- Figur 4a: das Vakuumventils in dem Längsschnitt in einer Zwischenposition;
- Figur 4b: das Vakuumventil in dem mittleren Querschnittschnitt durch die Verbindungsstange in der Zwischenposition;
- Figur 4c: das Vakuumventil in dem seitlichen Querschnittschnitt durch die Kolben-Zylinder-Anordnung in der Zwischenposition;
- Figur 5a: das Vakuumventil in dem mittleren Querschnittschnitt durch die Verbindungsstange in einer ersten Verschlussgliedstellung;
- Figur 5b: das Vakuumventil in dem seitlichen Querschnittschnitt durch die Kolben-Zylinder-Anordnung in der ersten Verschlussgliedstellung;
- Figur 6a: das Vakuumventil in dem mittleren Querschnittschnitt durch die Verbindungsstange in einer zweiten Verschlussgliedstellung; und
- Figur 6b: das Vakuumventil in dem seitlichen Querschnittschnitt durch die Kolben-Zylinder-Anordnung in der zweiten Verschlussgliedstellung.

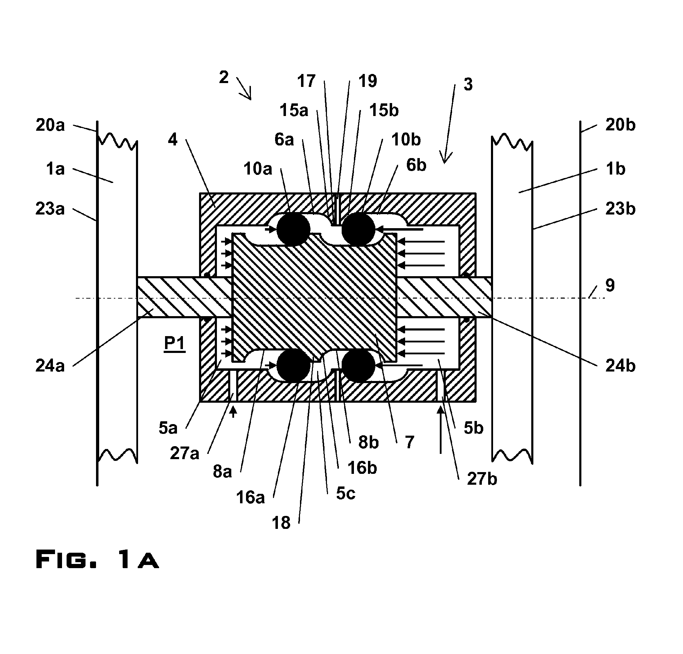

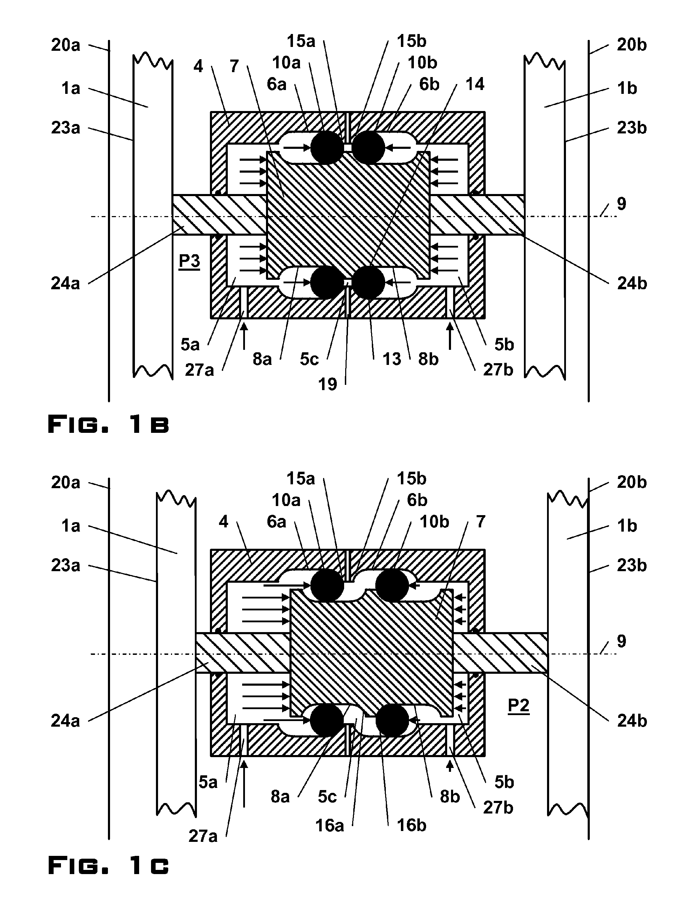

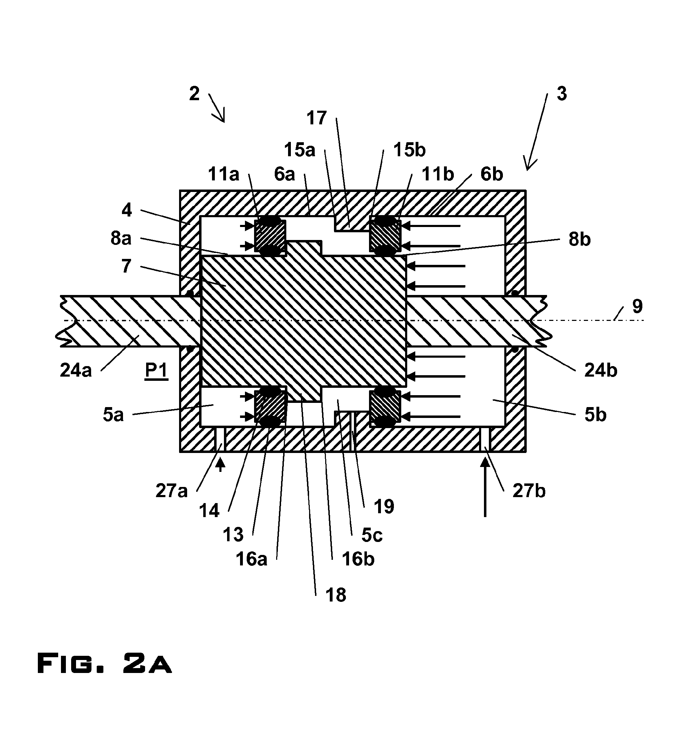

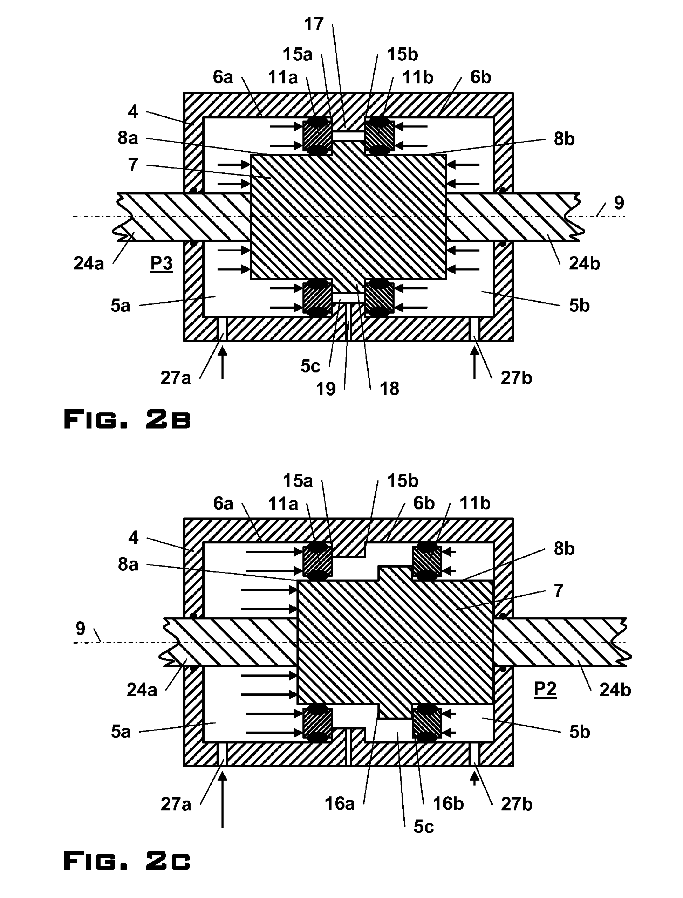

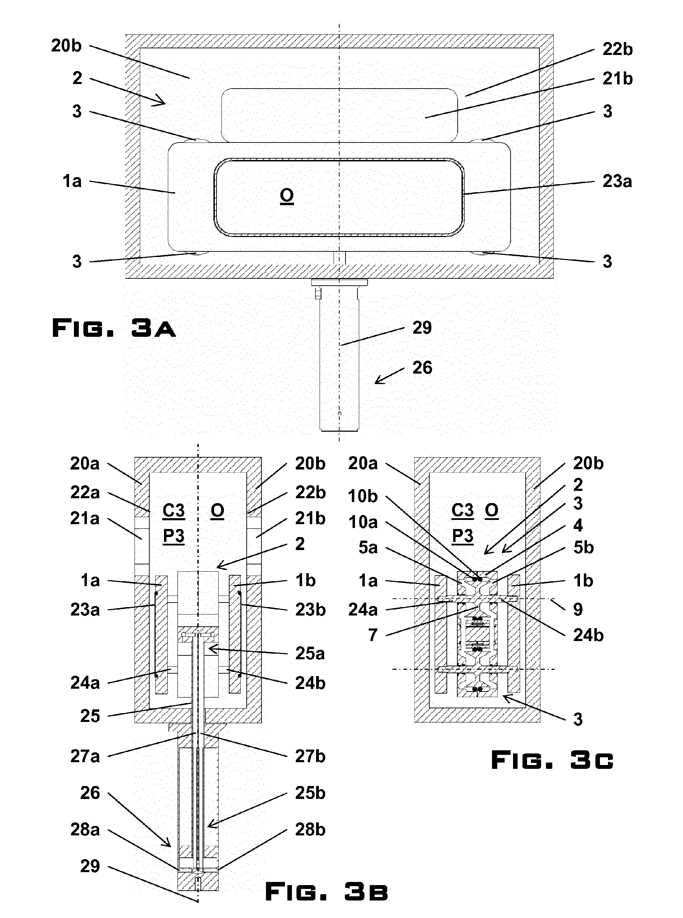

Die Figurengruppe aus den Figuren 1a, 1b, 1c, aus den Figuren 2a, 2b, 2c, sowie aus den Figuren 3a, 3b, 3c, 4a, 4b, 4c, 5a, 5b, 6a, 6b zeigen jeweils eine gemeinsame, exemplarische Ausführungsform einer erfindungsgemässen Kolben-Zylinder-Anordnung bzw. eines erfindungsgemässen Vakuumventils in unterschiedlichen Zuständen, aus unterschiedlichen Ansichten und in unterschiedlichen Detaillierungsgraden. Die Ausführungsformen unterscheiden sich lediglich bezüglich bestimmter Merkmale voneinander, weshalb die Ausführungsformen und/oder die Figurengruppen zum Teil gemeinsam beschrieben werden und weshalb teilweise nur auf die Unterschiede der Ausführungsformen eingegangen wird. Zum Teil wird auf bereits in vorangegangenen Figuren erläuterte Bezugszeichen und Merkmale nicht erneut eingegangen. Ausserdem ist zu beachten, dass die Figuren 1a bis 2c schematische Darstellungen zeigen, in denen die Bauteile zur besseren Veranschaulichung zum Teil anders angeordnet und dargestellt sind als in den Detaildarstellungen in den Figuren 3a bis 6b. Die schematischen Darstellungen der Kolben-Zylinder-Anordnungen in den Figuren 1a bis 2c sowie deren Erläuterungen sind daher auch auf das in den Figuren 3a bis 6b gezeigte Ausführungsbeispiel des Vakuumventils anzuwenden.

Die Figuren 3a bis 6b zeigen ein Vakuumventil in Form eines als Schieberventil bzw. Transferventil ausgebildeten Doppelventils. Das Vakuumventil hat eine erste Ventilwand 20a, die eine erste Öffnung 21a und einen die erste Öffnung 21a umlaufenden ersten Ventilsitz 22a. Beabstandet gegenüberliegend von der ersten Ventilwand 20a liegt eine zweite Ventilwand 20b, die eine zweite Öffnung 21b und einen die zweite Öffnung 21b umlaufenden, dem ersten Ventilsitz 22a beanstandet gegenüberliegenden zweiten Ventilsitz 22b aufweist, wie in den Figuren 3b und 3c gezeigt. Die beiden Öffnungen 21a und 21b haben einen im Wesentlichen rechteckigen Querschnitt, wie in Figur 3a erkennbar. Die Ventilwände 20a und 20b spannen ein vakuumdichtes Ventilgehäuse mit zwei Öffnungen, nämlich den Öffnungen 21a und 21b auf. Diese beiden Öffnungen 21a und 21b können mittels zweier Verschlussglieder 1a und 1b wechselweise verschlossen werden.

Das erste Verschlussglied 1a hat eine erste Verschlussseite 23a, Figur 3b, zum im Wesentlichen gasdichten Verschliessen der ersten Öffnung 21a. Hierzu ist auf der ersten Verschlussseite 23a eine der Form des ersten Ventilsitzes 22a entsprechende Dichtung aufvulkanisiert. Das zweite Verschlussglied 1b hat ebenfalls eine zweite Verschlussseite 23b, die in zur ersten Verschlussseite 23a entgegengesetzte Richtung weist, zum im Wesentlichen gasdichten Verschliessen der zweiten Öffnung 21b. Das zweite Verschlussglied 1b ist mechanisch mit dem ersten Verschlussglied 1a über vier Kolbenstangen 24a, 24b gekoppelt und gemeinsam mit dem ersten Verschlussglied 1a verstellbar.

Zum gemeinsamen Verstellen der beiden Verschlussglieder 1a und 1b besitzt das Vakuumventil zwei unabhängige lineare Antriebe, nämlich einen ersten Antrieb 2, Figuren 3a bis 3c, der als Längsantrieb wirkt, und einen zweiten Antrieb 26, Figuren 3a bis 3c, der als Querantrieb wirkt.

Der zweite Antrieb 26 ist als ein Linearantrieb in Form einer Kolben-Zylinder-Anordnung ausgebildet. Dieser zweite Antrieb 26 ist ausserhalb des Vakuumbereichs des Vakuumventils und ausserhalb des Ventilgehäuses angeordnet. Mittels des zweiten Antriebs 26 ist eine Verbindungsstange 25, die auf gasdichte Weise in den Vakuumbereich des Vakuumventils geführt ist, linear entlang einer Längsverstellachse 29 verstellbar, Figur 3a. An einem oberen erster Abschnitt 25a der Verbindungsstange 25 ist der erste Antrieb 2, der vier Kolben-Zylinder-Anordnungen 3 umfasst, angeordnet, während ein zweiter Abschnitt 25b der Verbindungsstange 25 mit dem zweiten Antrieb 26 gekoppelt ist, wie in der Figur 3b gezeigt.

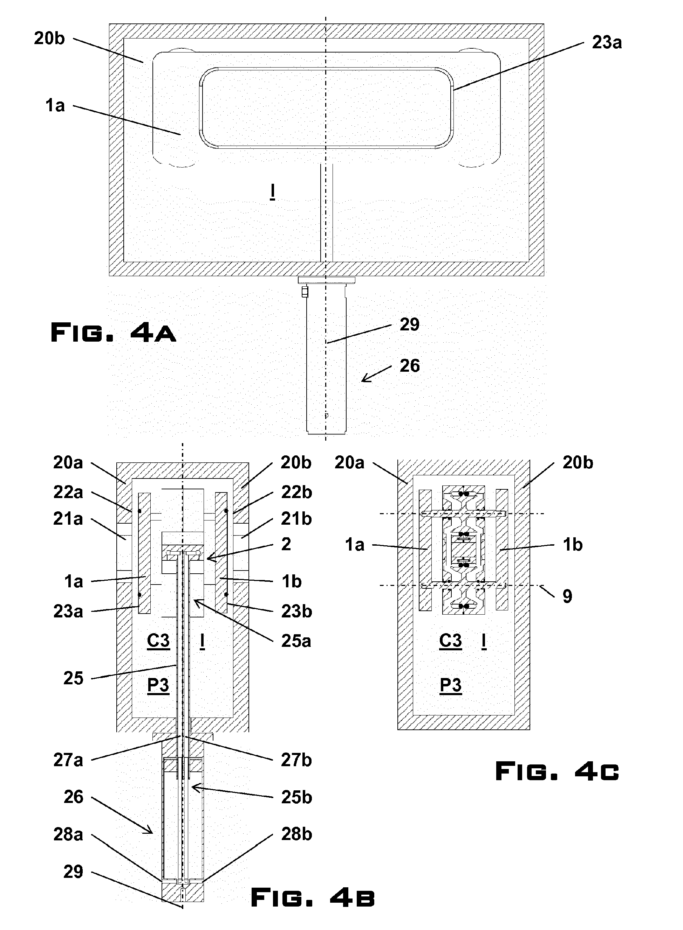

Mittels des zweiten Antriebs 26 können das erste Verschlussglied 1a, das zweite Verschlussglied 1b und der erste Antrieb 2 quer zum ersten Ventilsitz 22a und zum zweiten Ventilsitz 22b und quer zu den Öffnungen 21a, 21b zwischen einer Offenposition O, Figuren 3a bis 3c, und einer Zwischenposition I, Figuren 4a bis 4c, entlang der Längsverstellachse 29 linear verstellt werden. Der zweite Antrieb 26 ist somit derart ausgebildet und mit der mindestens einen Verbindungsstange 25 gekoppelt, dass die Kolben-Zylinder-Anordnungen 3 und die Verschlussglieder 1a und 1b quer zu geometrischen Kolbenachsen 9 entlang der Längsverstellachse 29 verstellbar sind. In der in den Figuren 3a bis 3c gezeigten Offenposition O geben das erste Verschlussglied 1a und das zweite Verschlussglied 1b sowohl die erste Öffnung 21a, als auch die zweite Öffnung 21b vollständig frei, so dass der Fliessweg durch die Öffnungen 21a und 21b des Vakuumventils vollständig geöffnet ist. In der in den Figuren 4a bis 4c gezeigten Zwischenposition I überdecken das erste Verschlussglied 1a die erste Öffnung 21a und das zweite Verschlussglied 1b die zweite Öffnung 21b, wobei sich die erste Verschlussseite 23a in einer Gegenüberlage zum ersten Ventilsitz 22a und die zweite Verschlussseite 23b in einer Gegenüberlage zum zweiten Ventilsitz 22b befinden.

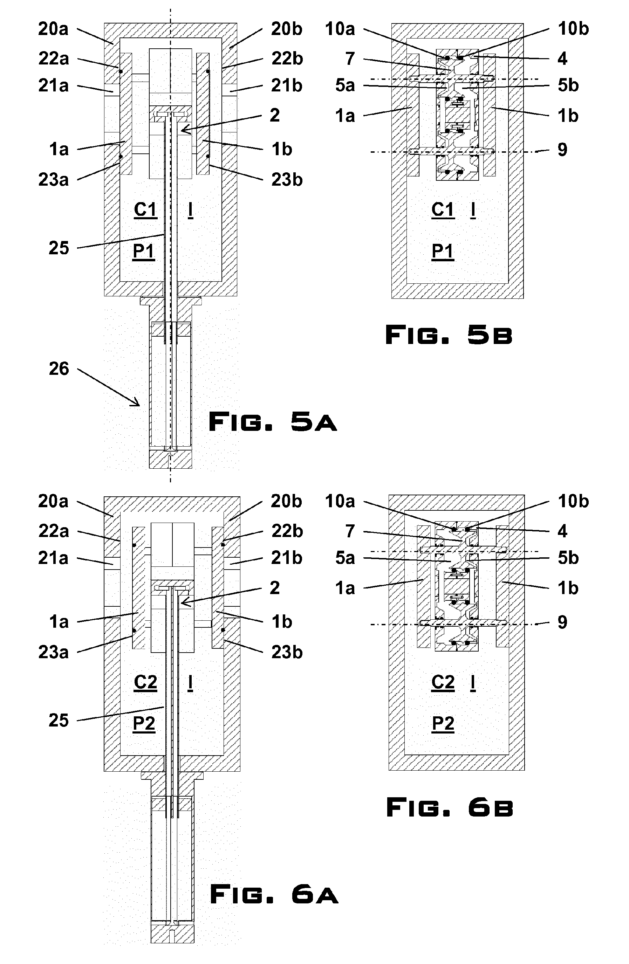

Der erste Antrieb 2 ist, wie im Folgenden noch dargestellt wird, derart ausgebildet und mit den Verschlussgliedern 1a und 1b gekoppelt, dass das erste Verschlussglied 1a und das zweite Verschlussglied 1b in der Zwischenposition I mittels des ersten Antriebs 2 senkrecht zum ersten Ventilsitz 22a und zum zweiten Ventilsitz 22b entlang geometrischer Kolbeachsen 9 zwischen einer mittleren Verschlussgliedstellung C3, Figuren 4a bis 4c, einer ersten Verschlussgliedstellung C1, Figuren 5a und 5b, sowie einer zweiten Verschlussgliedstellung C2, Figuren 6a und 6b verstellbar ist.

In der in den Figuren 4a bis 4c gezeigten mittleren Verschlussgliedstellung C3 befinden sich sowohl die erste Verschlussseite 23a des ersten Verschlussglieds 1a, als auch die zweite Verschlussseite 23b des zweiten Verschlussglieds 1b jeweils in einer beabstandeten Gegenüberlage zum jeweiligen Ventilsitz 22a bzw. 22b, wobei die erste Öffnung 21a und die zweite Öffnung 21b von den Verschlussgliedern 1a und 1b überdeckt, aber nicht gasdicht verschlossen werden, wie in den Figuren 4a bis 4c gezeigt.

In der ersten Verschlussgliedstellung C1, Figuren 5a und 5b, wird die erste Verschlussseite 23a des ersten Verschlussglieds 1a mittels des ersten Antriebs 2 im Wesentlichen senkrecht auf den ersten Ventilsitz 22a angedrückt, so dass die erste Öffnung 21a von dem ersten Verschlussglied 1a im Wesentlichen gasdicht verschlossen wird, während sich die zweite Verschlussseite 23b des zweiten Verschlussglieds 1b in einer beabstandeten Gegenüberlage zum zweiten Ventilsitz 22b befindet, so dass die zweite Öffnung 21b nicht gasdicht geschlossen ist. Diese ersten Verschlussgliedstellung C1 eignet sich insbesondere für eine Betriebsart, bei welcher auf der Seite der ersten Öffnung 21a ein relativer Unterdruck anliegt, da in diesem Falle das erste Verschlussglied 1a aufgrund der Druckdifferenz auf den ersten Ventilsitz 22a gehalten wird, ohne dass eine Kraft auf den ersten Antrieb 2 wirkt.

In der zweiten Verschlussgliedstellung C2, dargestellt in den Figuren 6a und 6b, wird die zweite Verschlussseite 23b des zweiten Verschlussglieds 1b mittels des ersten Antriebs 2 im Wesentlichen senkrecht auf den zweiten Ventilsitz 22b angedrückt, wodurch die zweite Öffnung 21b im Wesentlichen gasdicht verschlossen wird, während sich in dieser zweiten Verschlussgliedstellung C2 die erste Verschlussseite 23a des ersten Verschlussglieds 1a jeweils in einer beabstandeten Gegenüberlage zum ersten Ventilsitz 22a befindet. Diese zweite Verschlussgliedstellung C2 ist insbesondere für eine Betriebsart geeignet, bei welcher auf der Seite der zweiten Öffnung 21b ein relativer Unterdruck anliegt, da in diesem Falle das zweite Verschlussglied 1b aufgrund der Druckdifferenz auf den zweiten Ventilsitz 22b gehalten wird, ohne dass eine Kraft auf den ersten Antrieb 2 wirkt.

Im Folgenden wird der erfindungsgemässe erste Antrieb 2 genauer beschrieben.

Der ersten Antrieb 2 umfasst vier parallel zueinander in einem Rechteck in den Eckbereichen zwischen den beiden Verschlussgliedern 1a und 1b angeordnete Kolben-Zylinder-Anordnung 3 zum gleichzeitigen Verstellen beider Verschlussglieder 1a und 1b in senkrechte Richtung zu den Ventilsitzen 22a und 22b und entlang den jeweiligen Kolbenachse 9 relativ zu der Verbindungsstange 25, wie in den Figuren 3a bis 6b gezeigt.

Jede der Kolben-Zylinder-Anordnungen 3 hat eine mit der Verbindungsstange 25 fest gekoppelte Zylindereinheit 4 und linear bewegliche eine Kolbeneinheit 7, wie in den Figuren 1a bis 2c und den Figuren 3b und 3c gezeigt. Im Folgenden wird der Aufbau der Kolben-Zylinder-Anordnungen 3 anhand einer einzigen Kolben-Zylinder-Anordnungen 3 erklärt.

Die Zylindereinheit 4 hat eine Innenmantelfläche 6a und 6b, sowie einen Zylinderinnenraum 5a, 5b, 5c. Die Kolbeneinheit 7 hat eine Aussenmantelfläche 8a, 8b. Die Kolbeneinheit 7 ist im Zylinderinnenraum 5a, 5b, 5c linear relativ zu der Zylindereinheit 4 entlang der geometrischen Kolbenachse 9 verstellbar.

Zwei Dichtungseinheiten, in den Figuren 1a bis 1c und 3a bis 6b die Dichtungseinheiten 10a und 10b, in den Figuren 2a bis 2c die Dichtungseinheiten 11a und 11b, sind dichtend zwischen der Innenmantelfläche 6a, 6b und der Aussenmantelfläche 8a, 8b angeordnet. Gemeinsam mit der Kolbeneinheit 7 unterteilen die Dichtungseinheiten 10a, 10b bzw. 11a, 11b den Zylinderinnenraum in einen gasdichten ersten Druckraum 5a und einen vom ersten Druckraum 5a gasdicht getrennten, gasdichten zweiten Druckraum 5b.

Erfindungsgemäss werden die Dichtungseinheiten von einem ersten Dichtungskörper 10a (Figuren 1a bis 1c und 3a bis 6b) oder 11a (Figuren 2a bis 2c) und einem zweiten Dichtungskörper 10b (Figuren 1a bis 1c und 3a bis 6b) oder 11b (Figuren 2a bis 2c) gebildet.

Bei den Ausführungsformen in den Figuren 1a bis 1c und 3a bis 6b werden der erste Dichtungskörper von einem ersten O-Ring 10a und der zweite Dichtungskörper von einem zweiten O-Ring 10b gebildet. Diese O-Ringe 10a und 10b haben einen kreisförmigen Querschnitt. Die O-Ringe 10a und 10b bilden eine äussere Dichtung 13 zur Innenmantelfläche 6a und 6b sowie eine innere Dichtung 14 zur Aussenmantelfläche 8a und 8b.

Bei der Ausführungsform in den Figuren 2a bis 2c ist der erste Dichtungskörper ein erster Dichtungsträger 11a mit einer äusseren Dichtung 13, die eine äussere Dichtfläche bildet, und einer inneren Dichtung 14, die eine innere Dichtfläche bildet. Der zweite Dichtungskörper ist ein zweiter Dichtungsträger 11b, ebenfalls mit einer äusseren Dichtung 13, welche die äussere Dichtfläche bildet, und einer die innere Dichtfläche bildenden inneren Dichtung 14. Die Dichtungsträger 11a und 11b haben eine Ringform, wobei die äussere Dichtung 13 und die innere Dichtung 14 in Form von O-Ringen, welche jeweils in einer Nut im Dichtungsträger 11a und 11b gehalten werden, oder in Form aufvulkanisierter Dichtungen ausgeführt sind.

Diese beiden unterschiedlichen Varianten werden im Folgenden gemeinsam beschrieben, wobei lediglich auf die Unterschiede dieser Ausführungsformen eingegangen wird und der erste O-Ring 10a und der zweite O-Ring 10b, sowie der erste Dichtungsträger 11a und der zweite Dichtungsträger 11b jeweils als erster Dichtungskörper 10a, 11a und zweiter Dichtungskörper 10b, 11b bezeichnet werden.

Der erste Dichtungskörper 10a, 11a und der zweite Dichtungskörper 10b, 11b sind unabhängig voneinander axial relativ zu der Zylindereinheit 4 und zu der Kolbeneinheit 7 entlang der jeweiligen Kolbenachse 9 verschiebbar. Ausserdem liegen der erste Dichtungskörper 10a, 11a und der zweite Dichtungskörper 10b, 11b mit der äusseren Dichtfläche 13 jeweils gasdichtend auf der Innenmantelfläche 6a, 6b und sind relativ zu der Innenmantelfläche 6a, 6b axial verschiebbar. Weiters liegen der erste Dichtungskörper 10a, 11a und der zweite Dichtungskörper 10b, 11b mit der inneren Dichtfläche 14 jeweils gasdichtend auf der Aussenmantelfläche 8a, 8b und sind relativ zu der Aussenmantelfläche 8a, 8b axial verschiebbar.

Zwischen dem ersten Dichtungskörper 10a, 11a und dem zweiten Dichtungskörper 10b, 11b befindet sich ein mittlerer Zylinderinnenraum 5c, der gasdicht vom ersten Druckraum 5a und vom zweiten Druckraum 5b getrennt ist, und der über einen aus der Zylindereinheit 4 heraus führenden Entlüftungskanal 19 mit der äusseren Atmosphäre verbunden ist.

Die Verbindungsstange 25 hat eine erste Druckleitung 27a und eine zweite Druckleitung 27b, die sich jeweils zwischen dem ersten Abschnitt 25a und dem zweiten Abschnitt 25b der Verbindungsstange 25 erstrecken und die von in der Verbindungsstange 25 verlaufenden Kanälen gebildet werden, wie in den Figuren 3b, 4b, 5a und 6a gezeigt. Die erste Druckleitung 27a führt im ersten Abschnitt 25a in den ersten Druckraum 5a und im zweiten Abschnitt 25b zu einem ersten Druckanschluss 28a. Die zweite Druckleitung 27b führt im ersten Abschnitt 25a in den zweiten Druckraum 5b und im zweiten Abschnitt 25b zu einem zweiten Druckanschluss 28b.

Durch ein Verändern einer Druckdifferenz zwischen dem ersten Druckraum 5a und dem zweiten Druckraum 5b, also durch Anlegen unterschiedlicher Drücke an den Druckanschlüssen 28a und 28b, kann die Kolbeneinheit 7 zwischen ersten Relativstellung P1, Figuren 1a, 2a, 5a, 5b, einer mittleren Relativstellung P3, Figuren 1b, 2b, 3a bis 4c, und zweiten Relativstellung P2, Figuren 1c, 2c, 6a, 6b verstellt werden.

An der jeweiligen Kolbeneinheit 7 sind jeweils eine durch den ersten Druckraum 5a hindurch geführte erste Kolbenstange 24a und eine durch den zweiten Druckraum 5b hindurch geführte zweite Kolbenstange 24b angeordnet. Die beiden Kolbenstangen 24a und 24b werden gasdicht aus der Zylindereinheit 4 axialbeweglich hinaus geführt. An dem aus der Zylindereinheit hinaus geführten Ende der erste Kolbenstange 24a ist das erste Verschlussglied 1a fixiert. An dem aus der Zylindereinheit hinaus geführten Ende der zweiten Kolbenstange 24b ist das zweite Verschlussglied 1b fixiert. Somit sind die Kolben-Zylinder-Anordnungen 3 zwischen der ersten Verschlussseite 23a und der zweiten Verschlussseite 23b der Verschlussglieder 1a und 1b angeordnet.

Die Kolbeneinheiten 7 sind also über die Kolbenstangen 24a und 24b mechanisch mit den Verschlussgliedern 1a und 1b gekoppelt. Die erste Relativstellung P1 entspricht somit der ersten Verschlussgliedstellung C1, Figuren 5a, 5b. Die mittlere Relativstellung P3 entspricht der mittleren Verschlussgliedstellung C3, Figuren 3a bis 4c. Die zweite Relativstellung P2 entspricht der zweiten Verschlussgliedstellung C2, Figuren 6a, 6b.

Die Innenmantelfläche 6a, 6b der Zylindereinheit 4 wird von in den Zylinderinnenraum 5c nach innen ragenden Absatz 17 in einen ersten Abschnitt 6a der Innenmantelfläche und einen zweiten Abschnitt 6b der Innenmantelfläche unterteilt. Der nach innen ragende Absatz 17 bildet einen zum ersten Druckraum 5a und zum ersten Dichtungskörper 10a, 11a weisenden ersten Axialanschlag 15a und einen zum zweiten Druckraum 5b und zum zweiten Dichtungskörper 10b, 11b weisenden zweiten Axialanschlag 15b.

Auch die Aussenmantelfläche 8a, 8b der Kolbeeinheit 7 wird von einem nach aussen ragenden Absatz 18 in einen ersten Abschnitt 8a der Aussenmantelfläche und einen zweiten Abschnitt 8b der Aussenmantelfläche unterteilt. Der nach aussen ragende Absatz 18 bildet einen zum ersten Druckraum 5a und zum ersten Dichtungskörper 10a, 11a weisenden dritten Axialanschlag 16a und einen zum zweiten Druckraum 5b und zum zweiten Dichtungskörper 10b, 11b weisenden vierten Axialanschlag 16b.

Der erste Abschnitt 6a und der zweite Abschnitt 6b der Innenmantelfläche und der erste Abschnitt 8a und der zweite Abschnitt 8b der Aussenmantelfläche haben jeweils einen kreisförmigen Querschnitt in einer von der geometrischen Kolbeachse 9 senkrecht durchstossenen geometrischen Schnittebene.

Der erste Axialanschlag 15a des nach innen ragenden Absatzes 17 begrenzt die axiale Beweglichkeit des ersten Dichtungskörpers 10a, 11a relativ zu der Zylindereinheit 4 auf den auf der Seite des ersten Druckraums 5a angeordneten ersten Abschnitt 6a der Innenmantelfläche in Richtung zum zweiten Druckraum 5b.

Der zweite Axialanschlag 15b des nach innen ragenden Absatzes 17 begrenzt die axiale Beweglichkeit des zweiten Dichtungskörpers 10b, 11b relativ zu der Zylindereinheit 4 auf den auf der Seite des zweiten Druckraums 5b angeordneten zweiten Abschnitt 6b der Innenmantelfläche in Richtung zum ersten Druckraum 5a.

Der dritte Axialanschlag 16a des nach aussen ragenden Absatzes 18 begrenzt die axiale Beweglichkeit des ersten Dichtungskörpers 10a, 11a relativ zu der Kolbeneinheit 7 auf den auf der Seite des ersten Druckraums 5a angeordneten ersten Abschnitt 8a der Aussenmantelfläche in Richtung zum zweiten Druckraum 5b.

Der vierte Axialanschlag 16b des nach aussen ragenden Absatzes 18 begrenzt die axiale Beweglichkeit des zweiten Dichtungskörpers 10b, 11b relativ zu der Kolbeneinheit 7 auf den auf der Seite des zweiten Druckraums 5b angeordneten zweiten Abschnitt 8b der Aussenmantelfläche in Richtung zum ersten Druckraum 5a.

In der mittleren Relativstellung P3 sind erste Axialanschlag 15a und der dritte Axialanschlag 16a in radialer Gegenüberlage in Bezug auf die Kolbenachse 9 angeordnet, Figuren 1b, 2b, 3a bis 4c. Aufgrund dieser axialen Gegenüberlage sind der erste Axialanschlag 15a und der dritte Axialanschlag 16a derart relativ zueinander angeordnet, dass in der mittleren Relativstellung P3 der Zylindereinheit 4 die axiale Beweglichkeit des ersten Dichtungskörpers 10a, 11a in Richtung zum zweiten Druckraum 5b gemeinsam von dem ersten Axialanschlag 15a und dem dritten Axialanschlag 16a begrenzt ist, wie in den Figuren 1b, 2b, 3a bis 4c gezeigt.

Ausserdem sind in dieser mittleren Relativstellung P3 der zweite Axialanschlag 15b und der vierte Axialanschlag 16b in radialer Gegenüberlage in Bezug auf die Kolbenachse 9 angeordnet, wie ebenfalls in den Figuren 1b, 2b, 3a bis 4c gezeigt. Aufgrund dieser axialen Gegenüberlage sind auch der zweite Axialanschlag 15b und der vierte Axialanschlag 16b derart relativ zueinander angeordnet, dass in der mittleren Relativstellung P3 die axiale Beweglichkeit des zweiten Dichtungskörpers 10b, 11b in Richtung zum ersten Druckraum 5a gemeinsam von dem zweiten Axialanschlag 15b und zu dem vierten Axialanschlag 16b begrenzt ist, wie in den Figuren 1b, 2b, 3a bis 4c gezeigt.

Bei den Ausführungsformen in den Figuren 1a bis 1c und 3a bis 6b hat der nach innen ragenden Absatz 17 der Form des ersten O-Rings 10a und des zweiten O-Rings 10b entsprechende Übergange zu dem ersten Abschnitt 6a der Innenmantelfläche und dem zweiten Abschnitt 6b der Innenmantelfläche. Auch der nach aussen ragende Absatz 18 hat der Form des ersten O-Rings 10a und des zweiten O-Rings 10b entsprechende Übergange zu dem ersten Abschnitt 8a der Aussenmantelfläche und zu dem zweiten Abschnitt 8b der Aussenmantelfläche. Diese Übergänge des nach innen ragenden Absatzes 17 und des nach aussen ragende Absatzes 18 entsprechen im Wesentlichen dem Radius des Querschnitts der O-Ringe 10a und 10b, so dass diese gleichmässig auf den Axialanschlägen 15a bis 16b zum liegen kommen können, wodurch die O-Ringe 10a und 10b einem geringeren mechanischen Verschleiss unterworfen werden und sich die Lebensdauer erhöht.

Die begrenzte freie Beweglichkeit der beiden Dichtungskörper 10a, 10b, 11a, 11b bewirkt, dass die Verschlussglieder 1a und 1b in eine stabile, definierte Mittelstellung, nämlich die mittlere Verschlussgliedstellung C3 zwischen der ersten Verschlussgliedstellung C1 und der zweiten Verschlussgliedstellung C2, verstellt werden kann, indem beide Druckräume 5a und 5b mit Druck, insbesondere mit im Wesentlichen dem gleichen Druck beaufschlagt werden.

In der ersten Relativstellung P1, Figuren 1a, 2a, 5a und 5b, ist die Kolbeneinheit 7 in Richtung zum ersten Druckraum 5a verstellt. Das Volumen des ersten Druckraums 5a ist minimal und das Volumen des zweiten Druckraums 5b ist maximal. Der Druck im zweiten Druckraum 5b ist wesentlich grösser als der Druck im ersten Druckraum 5a, wie anhand der Pfeile veranschaulicht. Der erste Dichtungskörper 10a, 11a liegt auf dem dritten Axialanschlag 16a der Kolbeneinheit 7 auf. Der zweite Dichtungskörper 10b, 11b liegt aber auf dem zweiten Axialanschlag 15b der Zylindereinheit 4 auf. In der ersten Relativstellung P1 - und im Bereich zwischen der ersten Relativstellung P1 und der mittleren Relativstellung P3 - ist somit die auf die Kolbeneinheit 7 wirkende, wirksame Druckangriffsfläche im ersten Druckraum 5a grösser als die auf die Kolbeneinheit 7 wirkende, wirksame Druckangriffsfläche im zweiten Druckraum 5b, wie in den Figuren 1a und 2a anhand der Pfeile erkennbar.

Innerhalb dieses Bereichs zwischen der ersten Relativstellung P1 und der mittleren Relativstellung P3 steht der zweite Dichtungskörper 10b, 11b mit seiner äusseren Dichtfläche 13 relativ zum zweiten Abschnitt der Innenmantelfläche 6b der Kolbeneinheit 4 still, da er am zweiten Axialanschlag 15b anliegt, während bei Bewegung der Kolbeneinheit 7 der zweite Abschnitt 8b der Aussenmantelfläche der Kolbeneinheit 7 auf der inneren Dichtfläche 14 des zweiten Dichtungskörpers 10b, 11b gleitet, wie in den Figuren 1a und 2a gezeigt.

In der zweiten Relativstellung P2, Figuren 1c, 2c, 6a und 6b, in der die Kolbeneinheit 7 in Richtung zum zweiten Druckraum 5b verstellt ist, verhält es sich entsprechend umgekehrt. Das Volumen des zweiten Druckraums 5b ist minimal und das Volumen des ersten Druckraums 5a ist maximal. Der Druck im ersten Druckraum 5a ist wesentlich grösser als der Druck im zweiten Druckraum 5b, wie anhand der Pfeile veranschaulicht. Der zweite Dichtungskörper 10b, 11b liegt auf dem vierten Axialanschlag 16b der Kolbeneinheit 7 auf.

Der Druck im zweiten Druckraum 5b wirkt also sowohl über die effektive Druckangriffsfläche der Kolbeneinheit 7, als auch über die effektive Druckangriffsfläche des zweiten Dichtungskörpers 10b, 11b auf die Kolbeneinheit 7 in Richtung zum ersten Druckraum 5a. In der zweiten Relativstellung P2 - und im Bereich zwischen der zweiten Relativstellung P3 und der mittleren Relativstellung P3 - ist somit die auf die Kolbeneinheit 7 wirkende, wirksame Druckangriffsfläche im zweiten Druckraum 5b grösser als die auf die Kolbeneinheit 7 wirkende, wirksame Druckangriffsfläche im ersten Druckraum 5a.

Zum Verstellen der Kolbeneinheit 7 aus der mittleren Relativstellung P3 in Richtung zur ersten oder gegenüberliegenden zweiten Relativstellung P1 oder P2 ist also eine wesentliche relative Druckerhöhung in einem der beiden Druckräume erforderlich ist, da sich bei Verlassen der mittleren Reaktivstellung P2 aufgrund der grösser werdenden, wirksamen Druckangriffsfläche die entgegengesetzt wirkende Kraft erhöht. Die Kolbeneinheit 2 befindet sich somit in der mittleren Relativstellung P2, Figuren 1b, 2b, 3a bis 4c, in einem stabilen Gleichgewicht, sofern der Druck in den beiden Drückräumen 5a und 5b innerhalb eines grossen Bereichs im Wesentlichen gleich ist, und höher ist als der Druck im mittleren Zylinderinnenraum 5c und somit höher als in der umgebenden Atmosphäre.

Durch wechselweises oder gleichzeitiges Beaufschlagen des ersten Druckraums 5a und des zweiten Druckraums 5b mit relativem Überdruck ist es mittels einer einfachen pneumatischen Schaltung möglich, die Kolbeneinheit 7 zwischen der ersten Relativstellung P1, der zweiten Relativstellung P2 und der mittlerer Relativstellung P3 und somit auch die Verschlussglieder 1a und 1b zwischen der ersten Verschlussgliedstellung C1, der zweiten Verschlussgliedstellung C2 und der mittleren Verschlussgliedstellung C3 zu verstellen, wobei die jeweiligen Stellungen stabil gehalten werden.

## Patentansprüche

1. Vakuumventil mit einem ersten Verschlussglied (1a) und einem ersten Antrieb (2), der mindestens eine Kolben-Zylinder-Anordnung (3) aufweist, zum Verstellen des ersten Verschlussglieds (1a),
wobei die mindestens eine Kolben-Zylinder-Anordnung (3)
● eine Zylindereinheit (4), die einen Zylinderinnenraum (5a, 5b, 5c) und eine Innenmantelfläche (6a, 6b) aufweist,
● eine Kolbeneinheit (7), die eine Aussenmantelfläche (8a, 8b) aufweist und im Zylinderinnenraum (5a, 5b, 5c) linear relativ zu der Zylindereinheit (4) entlang einer geometrischen Kolbenachse (9) verstellbar ist, und
● eine Dichtungseinheit (10a, 10b; 11a, 11b), die dichtend zwischen der Innenmantelfläche (6a, 6b) und der Aussenmantelfläche (8a, 8b) angeordnet ist und die gemeinsam mit der Kolbeneinheit (7) den Zylinderinnenraum (5a, 5b, 5c) in einen gasdichten ersten Druckraum (5a) und einen vom ersten Druckraum (5a) gasdicht getrennten, gasdichten zweiten Druckraum (5b) unterteilt,
aufweist, wobei die mindestens eine Kolben-Zylinder-Anordnung (3) derart mit dem ersten Verschlussglied (1a) mechanisch gekoppelt ist, dass das erste Verschlussglied (1a) durch ein Verändern einer Druckdifferenz zwischen dem ersten Druckraum (5a) und dem zweiten Druckraum (5b) zwischen
● einer ersten Verschlussgliedstellung (C1), in der die Zylindereinheit (4) und die Kolbeneinheit (7) relativ zueinander in einer ersten Relativstellung (P1) zueinander positioniert sind, und
● einer zweiten Verschlussgliedstellung (C2), in der die Zylindereinheit (4) und die Kolbeneinheit (7) relativ zueinander in einer zweiten Relativstellung (P2) zueinander positioniert sind,
verstellbar ist,
**dadurch gekennzeichnet, dass**
● die Dichtungseinheit von einem ersten Dichtungskörper (10a; 11a) und einem zweiten Dichtungskörper (10b; 11b) gebildet wird, wobei die Dichtungskörper (10a, 10b; 11a, 11b)
- unabhängig voneinander axial relativ zu der Zylindereinheit (4) und zu der Kolbeneinheit (7) entlang der Kolbenachse (9) verschiebbar sind,
- jeweils eine gasdichtend auf der Innenmantelfläche (6a, 6b) anliegende und relativ zu der Innenmantelfläche (6a, 6b) axial verschiebbare äussere Dichtfläche (13) aufweisen und
- jeweils eine gasdichtend auf der Aussenmantelfläche (8a, 8b) anliegende und relativ zu der Aussenmantelfläche (8a, 8b) axial verschiebbare innere Dichtfläche (14) aufweisen,
● die Zylindereinheit (4) einen ersten Axialanschlag (15a) aufweist, der die axiale Beweglichkeit des ersten Dichtungskörpers (10a; 11a) relativ zu der Zylindereinheit (4) auf einen auf der Seite des ersten Druckraums (5a) angeordneten ersten Abschnitt (6a) der Innenmantelfläche in Richtung zum zweiten Druckraum (5b) begrenzt,
● die Zylindereinheit (4) einen zweiten Axialanschlag (15b) aufweist, der die axiale Beweglichkeit des zweiten Dichtungskörpers (10b; 11b) relativ zu der Zylindereinheit (4) auf einen auf der Seite des zweiten Druckraums (5b) angeordneten zweiten Abschnitt (6b) der Innenmantelfläche in Richtung zum ersten Druckraum (5a) begrenzt,
● die Kolbeneinheit (7) einen dritten Axialanschlag (16a) aufweist, der die axiale Beweglichkeit des ersten Dichtungskörpers (10a; 11a) relativ zu der Kolbeneinheit (7) auf einen auf der Seite des ersten Druckraums (5a) angeordneten ersten Abschnitt (8a) der Aussenmantelfläche in Richtung zum zweiten Druckraum (5b) begrenzt,
● die Kolbeneinheit (7) einen vierten Axialanschlag (16b) aufweist, der die axiale Beweglichkeit des zweiten Dichtungskörpers (10b; 11b) relativ zu der Kolbeneinheit (7) auf einen auf der Seite des zweiten Druckraums (5b) angeordneten zweiten Abschnitt (8b) der Aussenmantelfläche in Richtung zum ersten Druckraum (5a) begrenzt,
● der erste Axialanschlag (15a) und der dritte Axialanschlag (16a) derart relativ zueinander angeordnet sind, dass in einer zwischen der ersten Relativstellung (P1) und der zweiten Relativstellung (P2) liegenden, einer mittlere Verschlussgliedstellung (C3) entsprechenden mittleren Relativstellung (P3) der Zylindereinheit (4) und der Kolbeneinheit (7) relativ zueinander die axiale Beweglichkeit des ersten Dichtungskörpers (10a; 11a) in Richtung zum zweiten Druckraum (5b) gemeinsam von dem ersten Axialanschlag (15a) und dem dritten Axialanschlag (16a) begrenzt ist,
● und der zweite Axialanschlag (15b) und der vierte Axialanschlag (16b) derart relativ zueinander angeordnet sind, dass in der mittleren Relativstellung (P3) die axiale Beweglichkeit des zweiten Dichtungskörpers (10b; 11b) in Richtung zum ersten Druckraum (5a) gemeinsam von dem zweiten Axialanschlag (15b) und dem vierten Axialanschlag (16b) begrenzt ist.

2. Vakuumventil nach Anspruch 1,
**dadurch gekennzeichnet, dass**
der erste Axialanschlag (15a) und der zweite Axialanschlag (15b) der Zylindereinheit (4) von mindestens einem in den Zylinderinnenraum (5c) nach innen ragenden Absatz (17), der zwischen dem ersten Abschnitt (6a) der Innenmantelfläche und dem zweiten Abschnitt (6b) der Innenmantelfläche angeordnet ist, gebildet werden.

3. Vakuumventil nach Anspruch 2,
**dadurch gekennzeichnet, dass**
der dritte Axialanschlag (16a) und der vierte Axialanschlag (16b) der Kolbeneinheit (7) von mindestens einem nach aussen ragenden Absatz (18), der zwischen dem ersten Abschnitt (8a) der Aussenmantelfläche und dem zweiten Abschnitt (8b) der Aussenmantelfläche angeordnet ist, gebildet werden.

4. Vakuumventil nach Anspruch 3,
**dadurch gekennzeichnet, dass**
● der erste Axialanschlag (15a) und der dritte Axialanschlag (16a) sowie
● der zweite Axialanschlag (15b) und der vierte Axialanschlag (16b)
in der mittleren Relativstellung (P3) jeweils in radialer Gegenüberlage in Bezug auf die Kolbenachse (9) angeordnet sind.

5. Vakuumventil nach Anspruch 4,
**dadurch gekennzeichnet, dass**
● der mindestens eine nach innen ragenden Absatz (17) der Form des ersten Dichtungskörpers (10a; 11a) und des zweiten Dichtungskörpers (10b; 11b) entsprechende Übergange zu dem ersten Abschnitt (6a) der Innenmantelfläche und dem zweiten Abschnitt (6b) der Innenmantelfläche und
● der mindestens eine nach aussen ragende Absatz (18) der Form des ersten Dichtungskörpers (10a; 11a) und des zweiten Dichtungskörpers (10b; 11b) entsprechende Übergange zu dem ersten Abschnitt (8a) der Aussenmantelfläche und dem zweiten Abschnitt (8b) der Aussenmantelfläche
aufweist.

6. Vakuumventil nach Anspruch 5,
**dadurch gekennzeichnet, dass**
● der erste Dichtungskörper von einem ersten O-Ring (10a) und
● der zweite Dichtungskörper von einem zweiten O-Ring (10b)
gebildet wird und insbesondere die Übergänge des nach innen ragenden Absatzes (17) und des nach aussen ragende Absatzes (18) im Wesentlichen dem Radius der O-Ringe (10a, 10b) entsprechen.

7. Vakuumventil nach einem der Ansprüche 1 bis 5,
**dadurch gekennzeichnet, dass**
● der erste Dichtungskörper von einem ersten Dichtungsträger (11a) mit einer die äussere Dichtfläche bildenden äusseren Dichtung (13) und einer die innere Dichtfläche bildenden inneren Dichtung (14) und
● der zweite Dichtungskörper von einem zweiten Dichtungsträger (11b) mit einer die äussere Dichtfläche bildenden äusseren Dichtung (13) und einer die innere Dichtfläche bildenden inneren Dichtung (14)
gebildet wird.

8. Vakuumventil nach einem der Ansprüche 1 bis 7,
**dadurch gekennzeichnet, dass**
die Zylindereinheit (4) mit ihrem ersten Abschnitt (6a) und ihrem zweiten Abschnitt (6b) der Innenmantelfläche und die Kolbeneinheit (7) mit ihrem ersten Abschnitt (8a) und ihrem zweiten Abschnitt (8b) der Aussenmantelfläche einen kreisförmigen Querschnitt in einer von der geometrischen Kolbeachse (9) senkrecht durchstossenen geometrischen Schnittebene haben.

9. Vakuumventil nach einem der Ansprüche 1 bis 8,
**gekennzeichnet durch**
mindestens einen von einem mittleren Zylinderinnenraum (5c) zwischen dem ersten Dichtungskörper (10a; 11a) und dem zweiten Dichtungskörper (10b; 11b) aus der Zylindereinheit (4) heraus führenden Entlüftungskanal (19).

10. Vakuumventil nach einem der Ansprüche 1 bis 9
**gekennzeichnet durch**
● eine erste Ventilwand (20a), die eine erste Öffnung (21a) und einen die erste Öffnung (21a) umlaufenden ersten Ventilsitz (22a) aufweist, und
● eine erste Verschlussseite (23a) des ersten Verschlussglieds (1a) zum im Wesentlichen gasdichten Verschliessen der ersten Öffnung (21a)
wobei der erste Antrieb (2) derart ausgebildet und mit dem ersten Verschlussglied (1a) gekoppelt ist, dass das erste Verschlussglied (1a) mittels des ersten Antriebs (2) senkrecht zum ersten Ventilsitz (22a) zwischen
● der zweiten Verschlussgliedstellung (C2) und der mittleren Verschlussgliedstellung (C3), in welcher sich die erste Verschlussseite (23a) jeweils in einer beabstandeten Gegenüberlage zum ersten Ventilsitz (22a) befindet, und
● der ersten Verschlussgliedstellung (C1), in welcher die erste Verschlussseite (23a) im Wesentlichen senkrecht auf den ersten Ventilsitz (22a) angedrückt ist und die erste Öffnung (21a) im Wesentlichen gasdicht verschliesst,
verstellbar ist.

11. Vakuumventil nach Anspruch 10,
**gekennzeichnet durch**
● eine der ersten Ventilwand (20a) beabstandet gegenüberliegende zweite Ventilwand (20b), die eine zweite Öffnung (21b) und einen die zweite Öffnung (21b) umlaufenden, dem ersten Ventilsitz (22a) beanstandet gegenüberliegenden zweiten Ventilsitz (22b) aufweist, und
● ein zweites Verschlussglied (1b), das eine zweite Verschlussseite (23b), die in zur ersten Verschlussseite (23a) entgegengesetzte Richtung weist, zum im Wesentlichen gasdichten Verschliessen der zweiten Öffnung (21b) aufweist und das mechanisch mit dem ersten Verschlussglied (1a) gekoppelt und gemeinsam mit dem ersten Verschlussglied (1a) mittels der mindestens einen Kolben-Zylinder-Anordnung (3) zwischen
- der ersten Verschlussgliedstellung (C1) und der mittleren Verschlussgliedstellung (C3), in welcher sich die zweite Verschlussseite (23b) jeweils in einer beabstandeten Gegenüberlage zum zweiten Ventilsitz (22b) befindet, und
- der zweiten Verschlussgliedstellung (C2), in welcher die zweite Verschlussseite (23b) im Wesentlichen senkrecht auf den zweiten Ventilsitz (22b) angedrückt ist und die zweite Öffnung (21b) im Wesentlichen gasdicht verschliesst,
verstellbar ist.

12. Vakuumventil nach Anspruch 11,
**dadurch gekennzeichnet, dass**
● an der Kolbeneinheit (7) eine durch den ersten Druckraum (5a) hindurch geführte und gasdicht aus der Zylindereinheit (4) axialbeweglich hinaus geführte erste Kolbenstange (24a) und eine durch den zweiten Druckraum (5b) hindurch geführte und gasdicht aus der Zylindereinheit (4) axialbeweglich hinaus geführte zweite Kolbenstange (24b),
● an dem aus der Zylindereinheit (7) hinaus geführten Ende der erste Kolbenstange (24a) das erste Verschlussglied (1a),
● an dem aus der Zylindereinheit (7) hinaus geführten Ende der zweiten Kolbenstange (24b) das zweite Verschlussglied (1b) und
● zwischen der ersten Verschlussseite (23a) und der zweiten Verschlussseite (23b) die Kolben-Zylinder-Anordnung (3)
angeordnet ist.

13. Vakuumventil nach einem der Ansprüche 1 bis 12,
**dadurch gekennzeichnet, dass**
● ein erster Abschnitt (25a) einer Verbindungsstange (25) mit der Kolben-Zylinder-Anordnung (3) und ein zweiter Abschnitt (25b) der Verbindungsstange (25) mit einem zweiten Antrieb (26) gekoppelt ist,
● die Verbindungsstange (25) eine erste Druckleitung (27a) und eine zweite Druckleitung (27b), die sich jeweils zwischen dem ersten Abschnitt (25a) und dem zweiten Abschnitt (25b) erstrecken und die insbesondere von in der Verbindungsstange (25) verlaufenden Kanälen gebildet werden, aufweist,
● die erste Druckleitung (27a) im ersten Abschnitt (25a) in den ersten Druckraum (5a) und im zweiten Abschnitt (25b) zu einem ersten Druckanschluss (28a) führt,
● die zweite Druckleitung (27b) im ersten Abschnitt (25a) in den zweiten Druckraum (5b) und im zweiten Abschnitt (25b) zu einem zweiten Druckanschluss (28b) führt und
● der zweite Antrieb (26) derart ausgebildet und mit der mindestens einen Verbindungsstange (25) gekoppelt ist, dass die Kolben-Zylinder-Anordnung (3) und das erste Verschlussglied (1a), insbesondere quer zu der geometrischen Kolbenachse (9), entlang einer Längsverstellachse (29) verstellbar oder um eine Schwenkachse schwenkbar sind.

14. Vakuumventil nach Anspruch 13, rückbezogen auf einen der Ansprüche 10 bis 12,
**dadurch gekennzeichnet, dass**
der zweite Antrieb (26) derart ausgebildet und mit der Verbindungsstange (25) gekoppelt ist, dass das erste Verschlussglied (1a) mittels des zweiten Antriebs (26) quer zum ersten Ventilsitz (22a) zwischen
- einer Offenposition (O), in welcher das erste Verschlussglied (1a) die erste Öffnung (21a) freigibt, und
- einer Zwischenposition (I), in welcher das erste Verschlussglied (1a) die erste Öffnung (21a) überdeckt und sich die erste Verschlussseite (23a) in einer Gegenüberlage zum ersten Ventilsitz (22a) befindet
verstellbar ist.

15. Vakuumventil nach Anspruch 14,
**dadurch gekennzeichnet, dass**
● der zweite Antrieb (26) als Linearantrieb zum linearen Verstellen des ersten Verschlussglieds (1a) quer zum ersten Ventilsitz (22a) zwischen der Offenposition (O) und der Zwischenposition (I) entlang einer Längsverstellachse (29) und das Vakuumventil insbesondere als Schieberventil
oder
● der zweite Antrieb (26) als Schwenkantrieb zum Schwenken des ersten Verschlussglieds (1a) quer zum ersten Ventilsitz (22a) zwischen der Offenposition (O) und der Zwischenposition (I) um eine Schwenkachse und das Vakuumventil als Pendelventil
ausgebildet ist.
